# EUROPEAN PATENT SPECIFICATION

(11) **EP 4 535 807 B1**
(45) Date of publication and mention of the grant of the patent: **16.09.2026**
(21) Application number: 23925054.1
(22) Date of filing: 06.12.2023
(51) Int. Cl.: H04N 23/63, H04N 5/262, H04N 23/60, H04N 23/61, H04N 23/62, H04N 23/667

(54) **PHOTOGRAPHING METHOD AND ELECTRONIC DEVICE**
FOTOGRAFIEVERFAHREN UND ELEKTRONISCHE VORRICHTUNG
PROCÉDÉ DE PHOTOGRAPHIE ET DISPOSITIF ÉLECTRONIQUE

(30) Priority: 27.02.2023 CN 202310227367
(43) Date of publication of application: 09.04.2025
(73) Proprietor: Honor Device Co., Ltd., Shenzhen, Guangdong 518040 (CN)
(72) Inventor: WANG, Chen, Shenzhen, Guangdong 518040 (CN)
(74) Representative: MERH-IP Matias Erny Reichl Hoffmann Patentanwälte PartG mbB
(86) International application number: PCT/CN2023/136830
(87) International publication number: WO 2024/179109

(56) References cited:
- CN-A- 104 580 908
- CN-A- 105 827 951
- CN-A- 107 302 666
- CN-A- 110 177 215
- CN-A- 112 492 205
- CN-A- 113 747 080
- CN-A- 113 810 608
- CN-A- 114 827 342
- CN-A- 115 002 340
- CN-A- 115 525 188
- US-A1- 2007 236 593
- US-A1- 2013 242 167
- US-A1- 2014 184 849
- US-A1- 2018 091 728
- US-A1- 2024 223 889
- US-A1- 2024 276 055
- US-A1- 2024 373 119

## Description

### TECHNICAL FIELD

This application relates to the field of electronic technologies, and in particular to a photographing method and an electronic device.

### BACKGROUND

With development of electronic technologies, electronic devices such as a mobile phone and a tablet computer generally include a camera lens, for example, a front-facing camera lens, a rear-facing camera lens, and a wide-angle camera lens. Users can record wonderful images such as a splendid moment, a heart-warming scenario, and the like by using an electronic device that has a photographing capability.

US2014/184849A1 discloses a method for photographing an image in an apparatus having a camera. The method includes identifying a face area by focusing on a subject in an automatic shot mode, automatically and continuously shooting the subject if the identified face area is directed to the front toward the camera, setting a best photo by generating and displaying thumbnails of the continuously shot images of the subject, and by displaying an identifier on a thumbnail of at least one image satisfying a predetermined condition, and by displaying an identifier on a thumbnail of image satisfying a predetermined condition, and storing the at least one image satisfying the predetermined condition if storing of images is requested.
CN113810608A discloses a method of photography. The method comprises upon the user tapping this capture control, the electronic device selecting a single video frame from a footage being recorded by the camera as a captured photograph. A floating interface then appears above the video recording interface, serving to display a thumbnail of the captured photograph.
US2018/091728A1 discloses a device displaying a camera user interface including a live view from a camera. While displaying the live view from the camera: the device records media images that are captured by the camera, while continuing to display the live view from the camera; and the device further displays representations of a plurality of media images that were recorded while displaying the live view from the camera as frames scrolling across the display in a first direction. CN112492205A discloses a method for image previewing. The method includes receiving the user's first input to a thumbnail window when the shooting preview interface displays a thumbnail window that comprises a thumbnail image of a first visual object, displaying a preview window on said shooting preview interface in response to the first input. Therein the preview window comprises a preview image of said first visual object, the size of the preview image being larger than the size of the thumbnail image
CN115002340A discloses a video processing method. The method includes recording the first video in response to the user's first operation, displaying the first interface, which is the playback interface for the first video, and displaying the second interface in response to the second operation on the first control.
CN110177215A discloses an image processing method including generating a thumbnail based on that preview frame image when a first timestamp information t1 of a captured frame image coincides with a second timestamp information t2 of a preview frame image.

### SUMMARY

This application provides a photographing method and an electronic device, to resolve a timing conflict problem that auto capture is earlier than manual capture but a manually-captured thumbnail is displayed earlier.

According to a first aspect, this application provides a photographing method, the steps of appended claim 1.

In the first aspect, the first image frame may be a first manually-captured thumbnail in subsequent embodiments. The second image frame may be a preview frame corresponding to a time of manual capture, and the thumbnail of the second image frame may be a manually-captured thumbnail in subsequent embodiments. The thumbnail of the first image frame may be an automatically-captured thumbnail in subsequent embodiments.

In the first aspect, when the first time stamp is earlier than or equal to the second time stamp, there may be a timing conflict problem that auto capture is earlier than manual capture but the manually-captured thumbnail is displayed earlier. When the first time stamp is later than the second time stamp, manual capture and auto capture may be considered as two discrete and independent photographing behaviors.

In this way, when the first time stamp is earlier than or equal to the second time stamp, the electronic device may refresh the thumbnail in the preview interface only for manual capture, but does not refresh and display the automatically-captured thumbnail, to avoid the conflict problem.

With reference to the first aspect, in some embodiments, the method may further include: the electronic device stores the first image frame in a gallery; and the electronic device stores a third image frame in the gallery, where a time stamp of the third image frame is later than the first time stamp of the first image frame. In this way, while an automatically-captured highlight photo is generated and a user triggers manual capture, the electronic device may store both the automatically-captured highlight photo and the manually-captured highlight.

With reference to the first aspect, in some embodiments, the method may further include: the electronic device stores the thumbnail of the first image frame in the gallery; and the electronic device stores a thumbnail of the third image frame in the gallery, where a time stamp of the thumbnail of the third image frame is later than the first time stamp of the thumbnail of the first image frame. In this way, while the automatically-captured highlight photo is generated and the user triggers manual capture, the electronic device may store both the manually-captured thumbnail and the automatically-captured thumbnail in the gallery.

With reference to the first aspect, in some embodiments, the third image frame is obtained based on an image frame in a first time range, an image frame captured by the camera lens in the first time range includes the second image frame; and the third image frame is different from the second image frame.

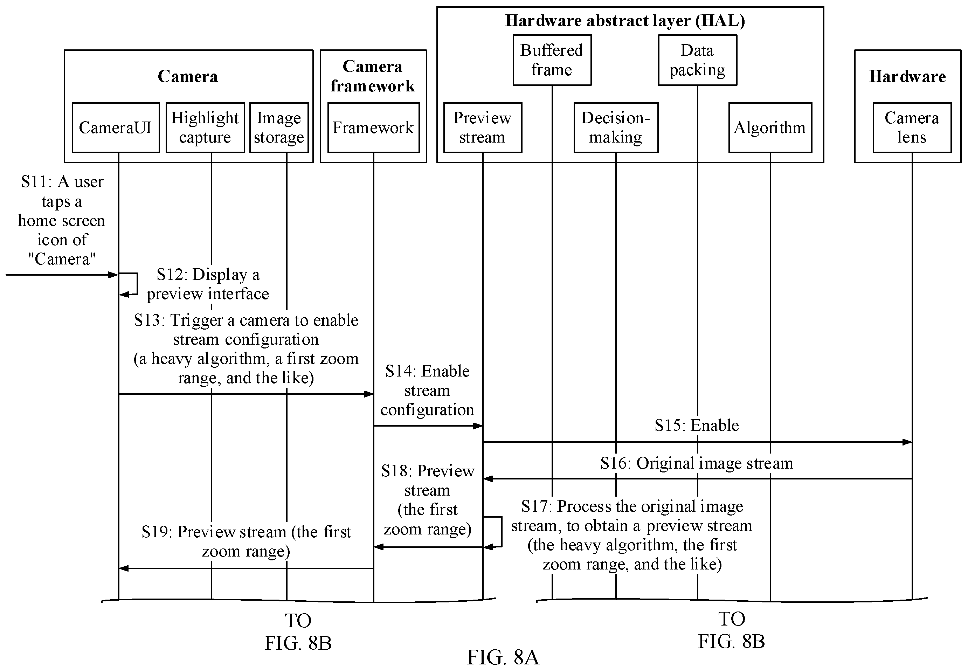

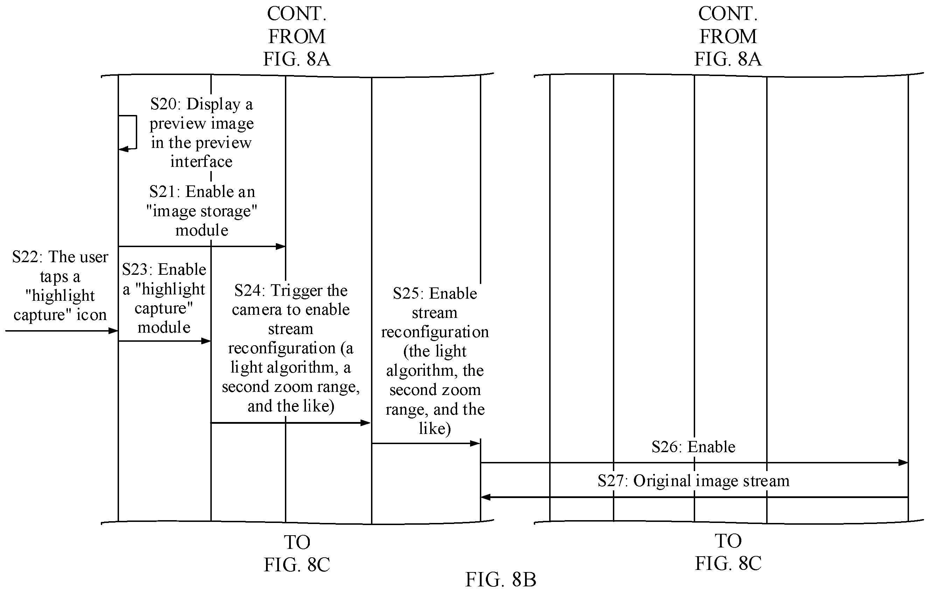

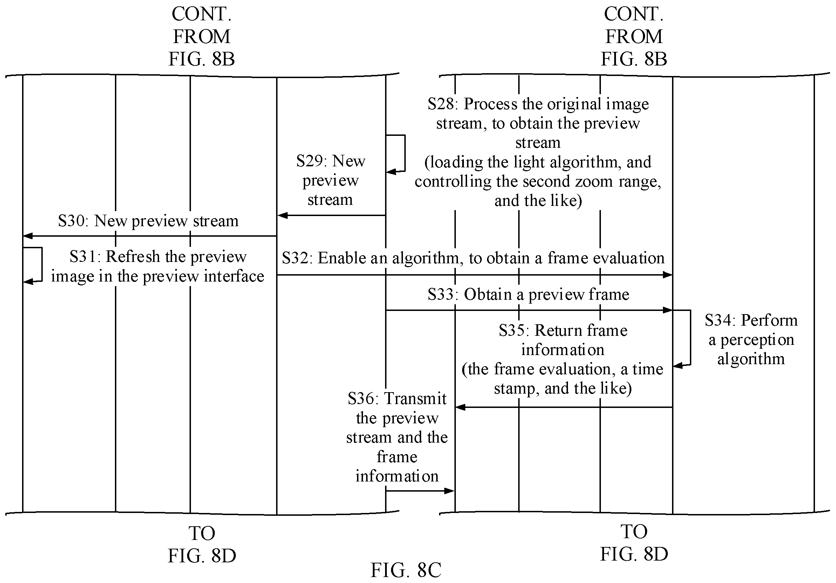

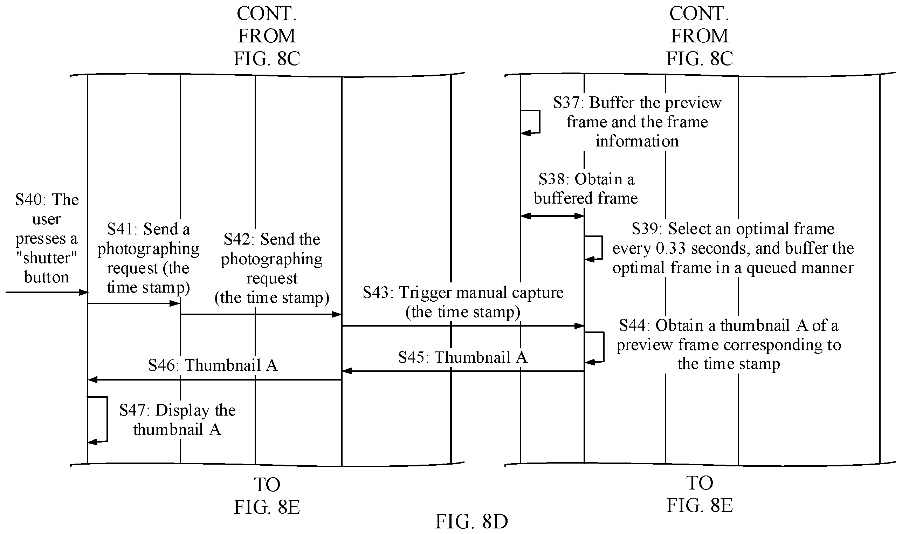

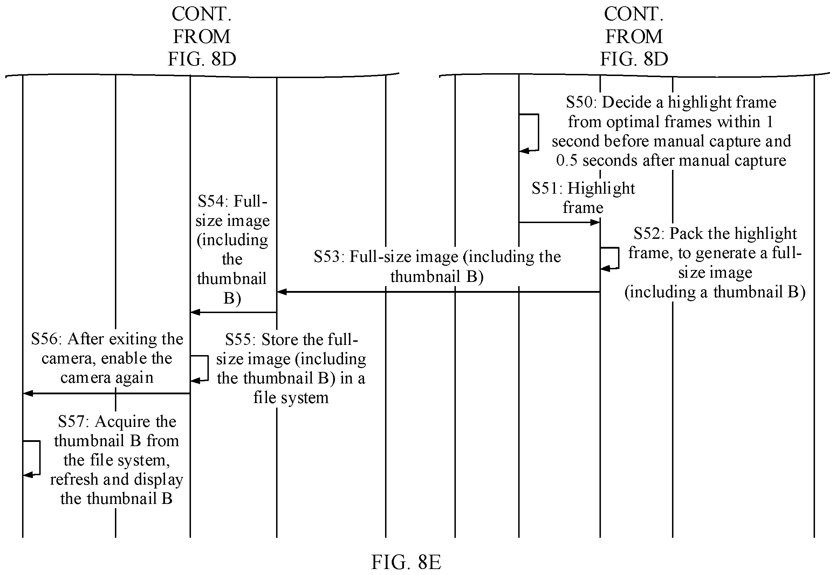

With reference to the first aspect, in some embodiments, the third image frame is obtained based on an image frame in a first time range, an image frame captured by the camera lens in the first time range includes the second image frame; and the third image frame is different from the second image frame. For details, refer to embodiments in FIG. 8A to FIG. 8E below.

With reference to the first aspect, in some embodiments, the method may further include: the electronic device exits displaying of the photographing preview interface; and the electronic device displays the photographing preview interface again, and displays a thumbnail of a third preview frame in the photographing preview interface.

With reference to the first aspect, in some embodiments, the method may further include: the electronic device detects, in the photographing preview interface, an operation of tapping a thumbnail of a second preview frame; the electronic device displays a full-size image display interface of a gallery application, where the full-size image display interface displays a third preview frame; the electronic device detects, in the full-size image display interface, an operation of viewing a photo forward; and the electronic device refreshes and displays the first image frame in the full-size image display interface.

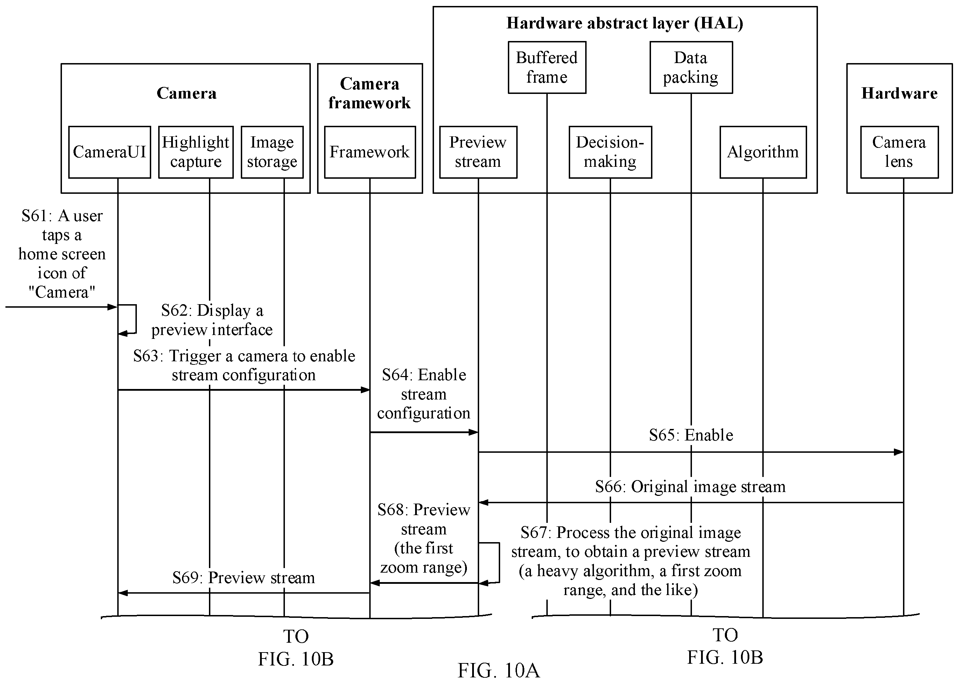

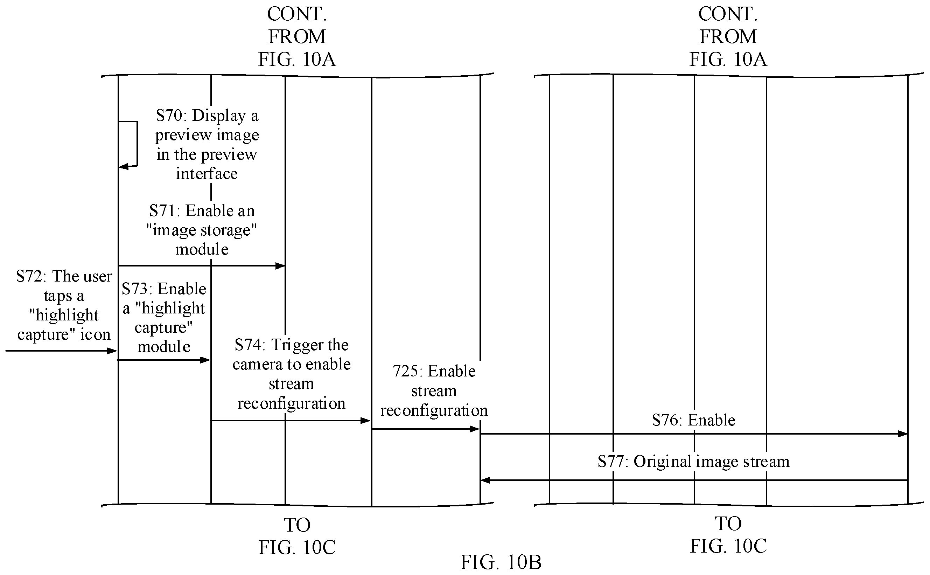

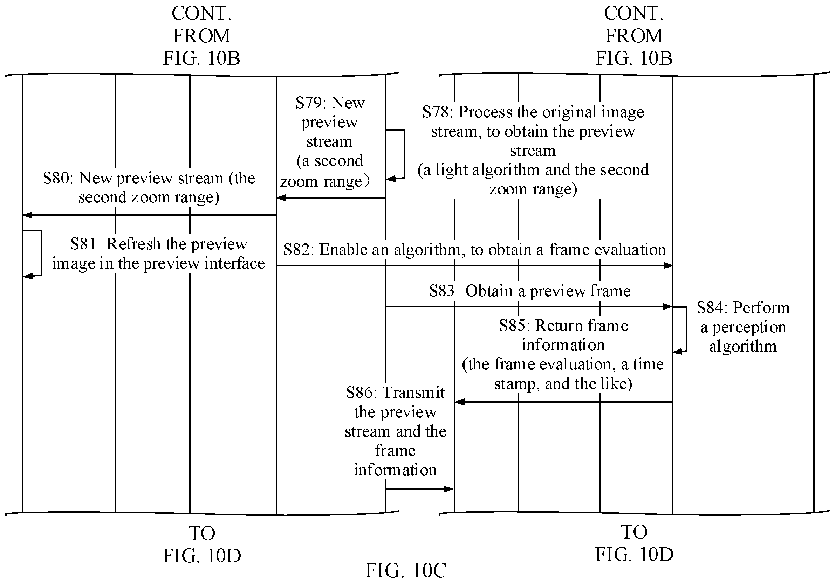

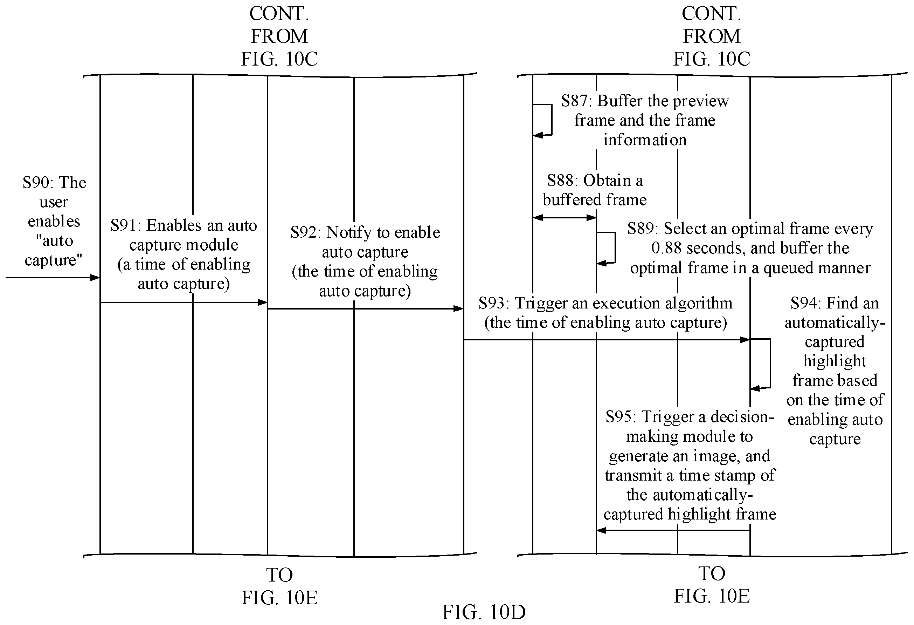

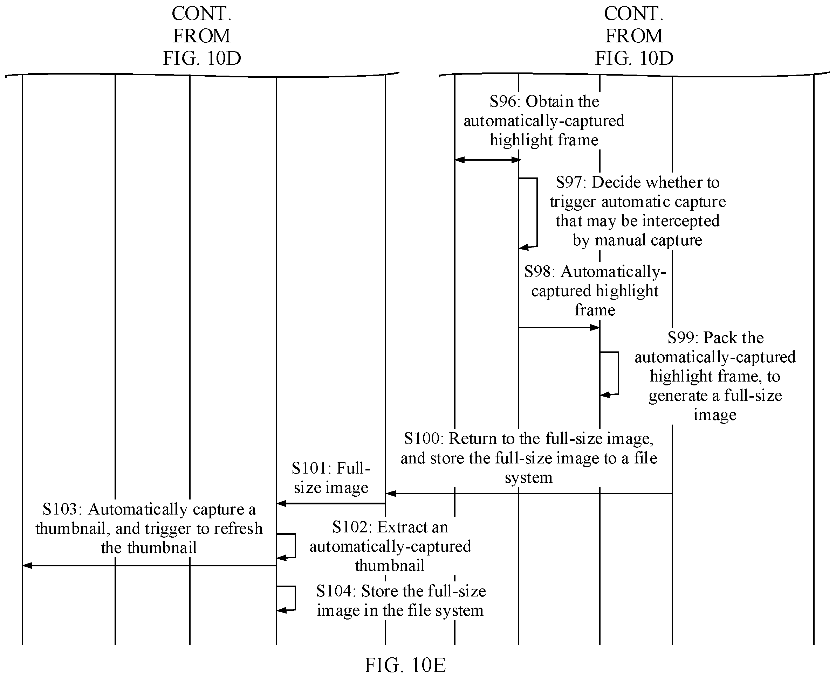

With reference to the first aspect, in a possible implementation, the first image frame is obtained from a preview frame obtained after the automatic capture function is enabled. For details, refer to embodiments in FIG. 10A to FIG. 10E below.

With reference to the first aspect, in a possible implementation, the method further includes: determining that the first time stamp is earlier than or equal to the second time stamp, or determining that the first time stamp is later than the second time stamp.

With reference to the first aspect, in a possible implementation, the electronic device includes a hardware abstract layer HAL; and that the first image frame is obtained from a preview frame obtained after the automatic capture function is enabled may include (refer to FIG. 10A to FIG. 10E and related embodiments): an algorithm module in the HAL obtains a preview frame in a preview stream from a preview stream module in the HAL; the algorithm module in the HAL decides a local optimal frame from every consecutive plurality of frames backward from a time at which automatic capture is enabled, where the local optimal frame is a preview frame with a highest image evaluation or a preview frame with an image evaluation higher than a first reference value in the consecutive plurality of frames; and after finding a local optimal frame from a preceding consecutive plurality of frames, the algorithm module determines whether there is a next local optimal frame in a following consecutive plurality of preview frames; if there is the next local optimal frame in the following consecutive plurality of preview frames, replacing a preceding local optimal frame by a following local optimal frame; or if there is no next local optimal frame in the following consecutive plurality of preview frames, denoting a preceding local optimal frame as the first image frame.

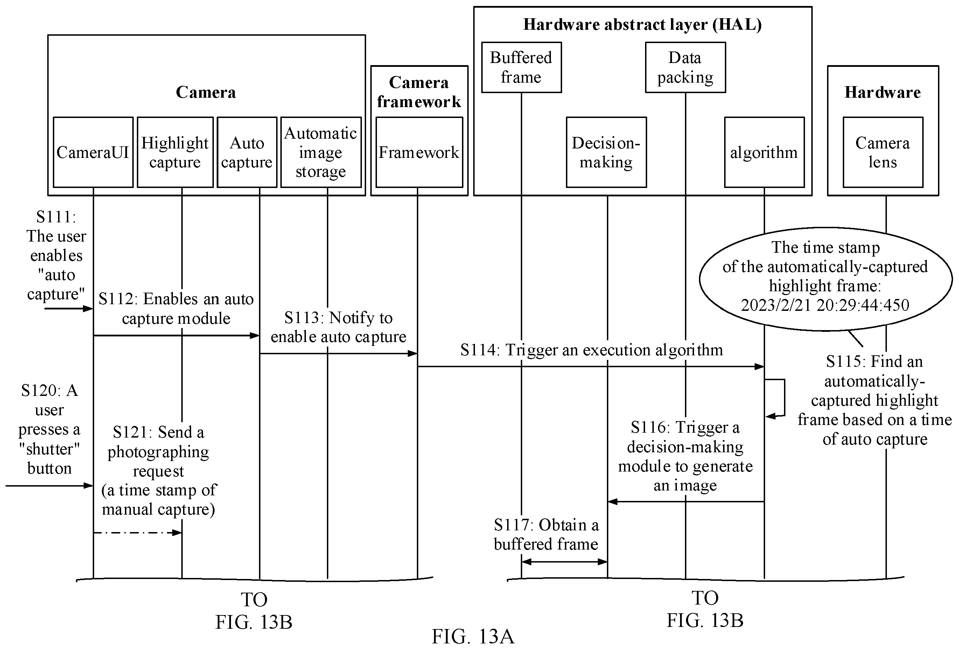

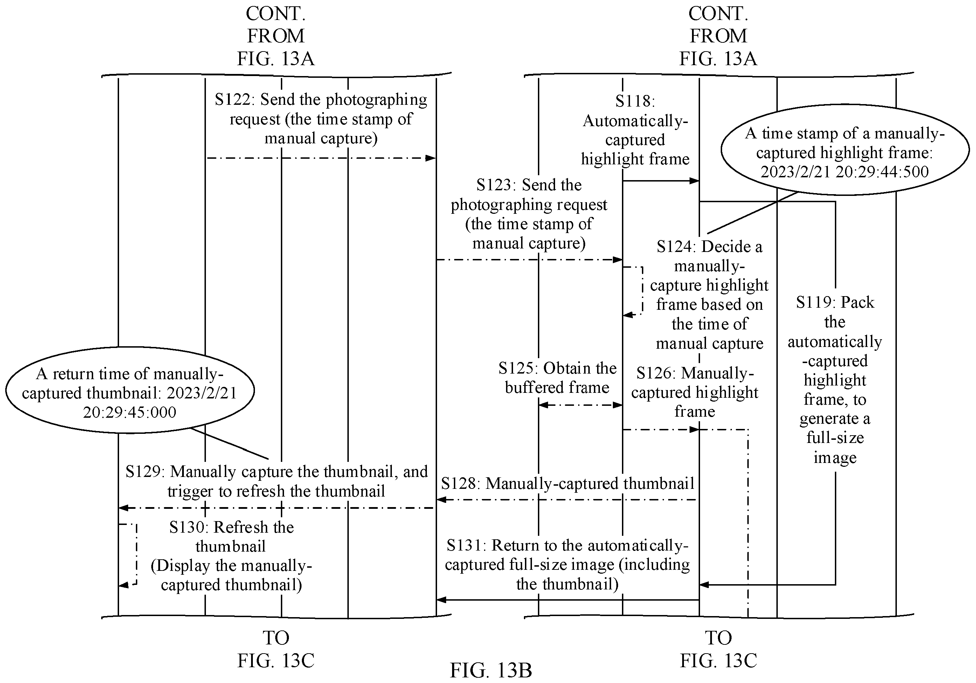

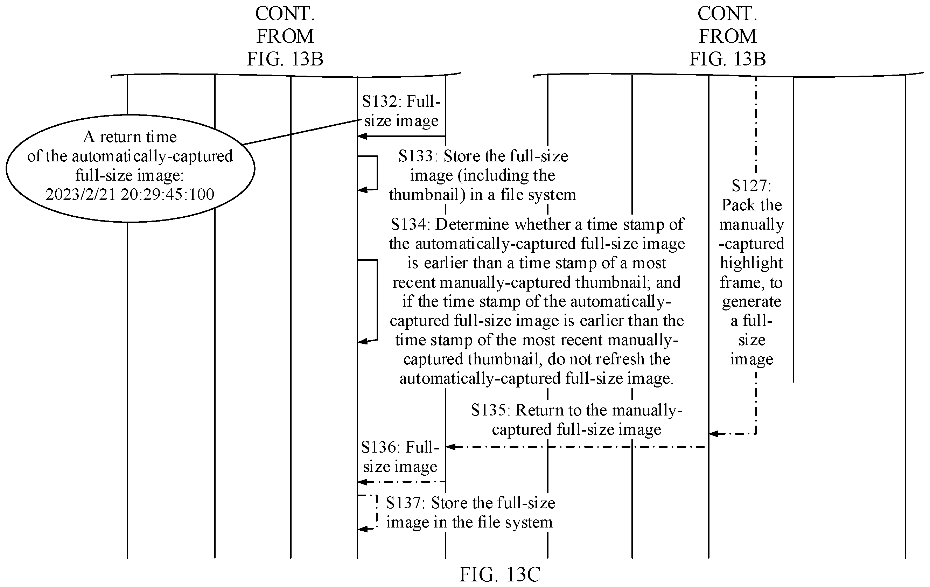

With reference to the first aspect, the electronic device includes: a camera application, a camera framework, and the HAL; and the skipping displaying a thumbnail of the first image frame includes that (refer to FIG. 13A to FIG. 13C and related embodiments): a decision-making module in the HAL sends the decided first image frame to a data packing module in the HAL; the data packing module packs the first image frame; the data packing module returns a packed first image frame to the camera framework, where the packed first image frame includes the thumbnail of the first image frame; the camera framework returns the packed first image frame to an automatic image storage module in the camera application; the automatic image storage module extracts the thumbnail of the first image frame from the packed first image frame; and the automatic image storage module determines whether the time stamp of the first image frame is earlier than the time stamp of the thumbnail of the second image frame, and if the time stamp of the first image frame is earlier than the time stamp of the thumbnail of the second image frame, it is determined not to refresh and display the thumbnail of the first image frame.

With reference to the first aspect, that the electronic device displays a thumbnail of the second image frame includes that (refer to FIG. 13A to FIG. 13C and related embodiments): the decision-making module in the HAL returns the thumbnail of the second image frame to the camera framework; the camera framework returns the thumbnail of the second image frame to a UI module in the camera application; and the UI module displays the thumbnail of the second image frame.

With reference to the first aspect, in a possible implementation, the electronic device includes: a camera application, a camera framework, and a HAL; and that the third image frame is obtained based on an image frame in a first time range may include (refer to FIG. 8A to FIG. 8E and related embodiments): a decision-making module in the HAL obtains a preview frame in a preview stream and frame information of the preview frame from a frame buffering module in the HAL, where the frame information includes a time stamp, and a frame evaluation; the decision-making module selects a local optimal frame once every period of time, and buffering the local optimal frame in a queued manner, where the local optimal frame is a preview frame with a highest image evaluation or a preview frame with an image evaluation higher than a first reference value within the period of time; and the decision-making module selects the third image frame from a local optimal frame that is buffered in a queued manner and that is in the first time range, where the third image frame is a preview frame with a highest image evaluation or a preview frame with an image evaluation higher than a second reference value in the first time range.

With reference to the first aspect, in a possible implementation, the method may further include: an algorithm module in the HAL obtains a preview frame in preview from a preview stream module in the HAL, and performs image evaluation on the preview frame, to obtain a frame evaluation; the algorithm module returns the frame evaluation of the preview frame to the frame buffering module in the HAL; and the frame buffering module receives the preview frame in the preview stream transmitted by the preview stream module, and buffers the preview frame and the frame information of the preview frame.

With reference to the first aspect, in a possible implementation, that the electronic device stores a third image frame in the gallery may include:
a decision-making module sends the third image frame to a data packing module in a HAL;
the data packing module packs the third image frame, and returns a packed third image frame to a camera framework, where the packed third image frame includes the thumbnail of the third image frame;
the camera framework returns the packed third image frame to an image storage module in a camera application; and
the image storage module stores the packed third image frame.

According to a second aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method described in the first aspect and any possible implementation of the first aspect.

According to a first example that is not encompassed by the claims but useful for understanding the invention, an embodiment of this application provides a chip system, where the chip system is applied to an electronic device, the chip system includes one or more processors, and the processor is configured to invoke a computer instruction so that the electronic device performs the method described in any one of the first aspect or the possible implementations of the first aspect.

According to a third aspect, an embodiment of this application provides a computer-readable storage medium including instructions, and when the instructions are run on an electronic device, the electronic device is enabled to perform the method according to the first aspect and any possible implementation in the first aspect.

According to a second example that is not encompassed by the claims but useful for understanding the invention, an embodiment of this application provides a computer program product including instructions, and when the computer program product is run on an electronic device, the electronic device is enabled to perform the method according to the first aspect and any possible implementation in the first aspect.

It may be understood that the electronic device provided according to the second aspect, the chip system provided according to the third aspect, the computer storage medium provided according to the fourth aspect, and the computer program product provided according to the fifth aspect are all configured to perform the method provided in embodiments of this application. Therefore, for beneficial effects that can be achieved therein, refer to the beneficial effects in the corresponding method, and details are not described herein again.

### BRIEF DESCRIPTION OF DRAWINGS

FIG. 1A to FIG. 1H are examples of a UI of enabling "highlight capture";
FIG. 2A to FIG. 2H are examples of a UI of an automatically-captured highlight photo;
FIG. 3A to FIG. 3F are examples of a UI of a manually-captured highlight photo;
FIG. 4A to FIG. 4J are schematic diagrams in which an electronic device manually captures a highlight photo in a "Video" mode;
FIG. 5A to FIG. 5D are examples of a UI that auto capture and manual capture are triggered;
FIG. 6 is an example of a hardware structure of an electronic device according to an embodiment of this application;
FIG. 7 is an example of a software architecture of an electronic device according to an embodiment of this application;
FIG. 8A to FIG.8E are a schematic diagram of a method for manually capturing a highlight photo according to an embodiment of this application;
FIG. 9 is a schematic diagram of a decision-making mechanism for a manually-captured highlight frame according to an embodiment of this application;
FIG. 10A to FIG. 10E are a schematic diagram of a method for automatically capturing a highlight photo according to an embodiment of this application;
FIG. 11 and FIG. 12 are examples of two decision-making mechanisms for automatically capturing a highlight frame according to an embodiment of this application;
FIG. 13A to FIG. 13C are a schematic diagram of a photographing method according to an embodiment of this application; and
FIG. 14 is an example of a schematic diagram of a frame selection strategy according to an embodiment of this application.

### DESCRIPTION OF EMBODIMENTS

Terms used in the following embodiments of this application are only intended to describe particular embodiments, and are not intended to limit this application.

A highlight photo is an image captured by an electronic device via a camera lens at a splendid moment. The splendid moment may be a moment at which a photographed object is in an optimal state or action within a period of time. The state and the action are respectively to a still life photographing scenario and a non-still life photographing scenario. In the still life photographing scenario, the splendid moment is a moment at which the photographed object is in a better relative still state in physical space and a still life object is clearly imaged without jitters and noise during camera lens imaging. In the non-still photographing scenario, the splendid moment is a moment at which the photographed object has optimal action performance in physical space and a still life object is clearly imaged without jitters and noise during camera lens imaging.

For example, when a place of interest is photographed, the splendid moment is a moment at which a building is completely and clearly imaged on the electronic device via the camera lens without jitters and noise, and a photo that is formed with an image captured by the electronic device via the camera lens at the splendid moment is a highlight photo of the place of interest. When a long jumper is photographed, the splendid moment is a moment at which the jumper jumps forward after jumping and is completely and clearly imaged, without jitters and noise, and a photo that is formed with an image captured by the electronic device via the camera lens at the splendid moment is a highlight photo of the long jumper. When a close-up portrait is photographed, the splendid moment is a time at which the person opens eyes and smiles and is completely and clearly imaged, without jitters and noise, and a photo that is formed with an image captured by the electronic device via the camera lens at the splendid moment is a highlight photo of the person.

However, during photographing, due to a reaction time delay of the person, it is difficult for the user to take a highlight photo that meets an expectation.

For example, at a time T1, the user views a k^{th} frame of preview image in a preview interface of a camera application, and intends to capture the image frame. In this case, the user performs a photographing operation. However, due to the reaction time delay of the person and a time required for the electronic device to complete photographing, the image finally presented by the electronic device to the user is an image after the k^{th} frame of image, for example, a (k+n)^{th} frame of image. The frame of image does not meet a capturing expectation of the user.

Particularly, due to uncertainty of the reaction time delay of the person and device shaking caused by a capturing action, a ghost easily appears in a photo actually output by the electronic device to the user. This seriously affects image quality of a finally captured photo, and affects photographing experience of the user.

In view of this, embodiments of this application provide a photographing method, to avoid a problem that it is difficult to capture the highlight photo that meets the expectation due to a reaction time delay of a person.

The electronic device is an electronic device that has a camera lens and provides services of photographing and display, such as a smart phone, a tablet computer, a large-screen device, and the like. The photographing method provided in embodiments of this application may be embodied in the electronic device as a "manual capture" function.

**First, the "manual capture" function provided in embodiments** of this **application is described with reference to a user interface (user interface, UI) provided in the electronic device.**

### Enabling "highlight capture"

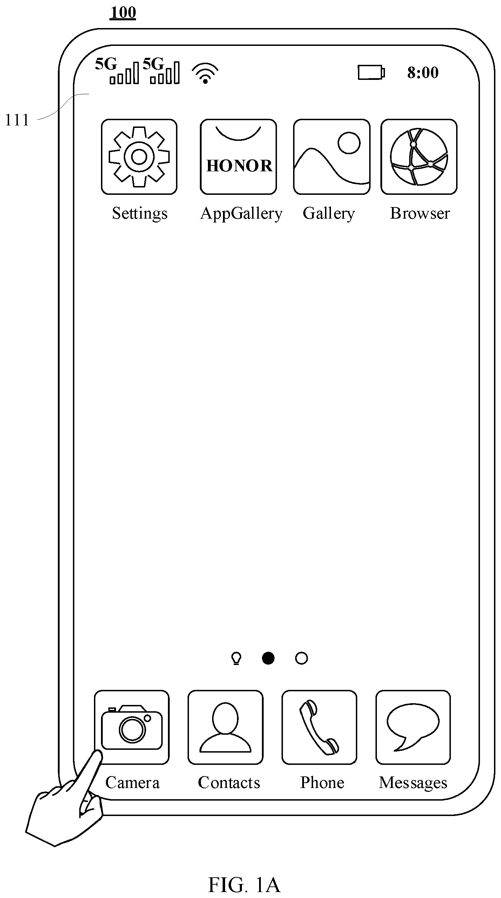

FIG. 1A to FIG. 1C are examples of a UI showing enabling "highlight capture".

FIG. 1A is an example of a home screen 111 of a system according to an embodiment of this application.

As shown in FIG. 1A, the home screen 111 shows a page with application icons. The page includes a plurality of application icons (for example, a settings application icon, an AppGallery application icon, a gallery application icon, a browser application icon, and the like.) A page indicator may be further displayed and included below the plurality of application icons, to indicate a location relationship between a currently displayed page and another page. A tray region is displayed below the page indicator. The tray region includes a plurality of tray icons, for example, a camera application icon, a contacts application icon, a phone application icon, and a messages application icon. The tray region remains displayed during page switching. In some embodiments, the page may include a plurality of application icons and a page indicator. The page indicator may not be a part of the page, and may exist alone. The tray icon is also optional. This is not limited in this embodiment of this application.

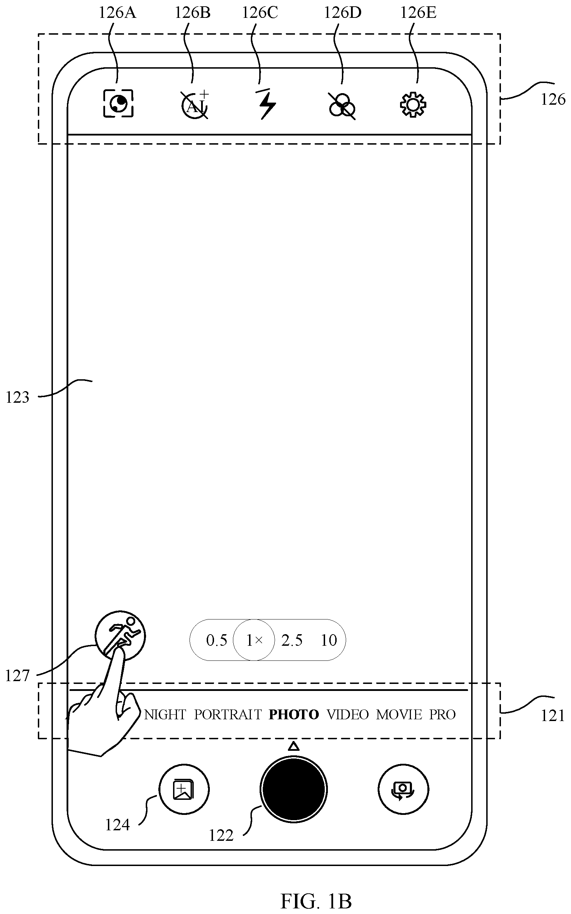

The electronic device may detect a user operation of enabling the camera application, for example, an operation of tapping a home screen icon of the camera application. In response to the operation, the electronic device may display a user interface shown in FIG. 1B.

FIG. 1B is an example of a preview interface according to an embodiment of this application.

As shown in FIG. 1B, the preview interface may include a mode bar 121, a photographing control 122, a preview window 123, a playback control 124, a shortcut function region 126, and a "highlight capture" option 127.

The mode bar 121 may include a plurality of photo mode options, such as "Night", "Portrait", "Photo", and "Video". Different photo modes may provide photographing services with different effect for the user. The user may select any one of the plurality of photo modes to take a photo based on different needs. For example, "photo" may be a default photo mode, and used to take a photo. "Video" is used to record a video. The "Night" mode is applicable to a photographing scenario with dark light, for example, at night. The "Portrait" mode is applicable to a photographing scenario in which a photographing body is a person. The electronic device may detect a user operation of switching a mode, for example, an operation of leftward swiping/rightward swiping in the mode bar 121, and may change a current photo mode based on the operation. For example, when detecting that the mode bar 121 is dragged to slide leftward (a leftward swiping operation) and the icon stays at a "Portrait" option, the electronic device may switch to the "Portrait" mode. By default, the electronic device first enables the "Photo" mode.

The photographing control 122 is used to trigger photographing. The electronic device may detect whether a user operation is performed on the photographing control 122, for example, a tap operation. After detecting the user operation performed on the photographing control 122, the electronic device may generate a photographing instruction. The electronic device may acquire, based on the photographing instruction, an image reported by the camera lens at a corresponding time stamp, and may store the image as a photo.

The preview window 123 may be used to display, in real time, the image reported by the camera lens. In different photo modes, the electronic device may process the image reported by the camera lens, to improve display effect of the image. For example, in the "portrait" mode, the electronic device may perform blurring on a background in the image reported by the camera lens, to highlight a portrait. In this case, the preview window 123 may display, in real time, an image obtained after being processed by different image processing algorithms corresponding to the different photographing modes, to enable the user to perceive photographing effect corresponding to the different photographing modes in real time.

The playback control 124 may be used to browse a thumbnail of a photographed photo/video. After detecting a user operation performed on the playback control 124, the electronic device may further display a highlight photo corresponding to the thumbnail.

The shortcut function region 126 may include an HDR function option 126A, an AI function option 126B, a flash function option 126C, a color mode function option 126D, a settings function option 126E, and the like. The HDR function option 126A may be used to trigger, when being enabled, the electronic device to fuse images using an HDR algorithm. An AI scenario recognition control 126B may be used to trigger, when being enabled, the electronic device to recognize a photographing scenario in a preview image, and the AI scenario recognition control 126B is disabled currently. The flash control 126C may be used to trigger the electronic device to turn on or off a flash. The color mode control 126D may be used to trigger the electronic device to process an image captured by the camera lens via a color filter. The settings control 126E may be used to set a photographing parameter (for example, an image size, a storage format of the image, and the like) of the electronic device, and the like.

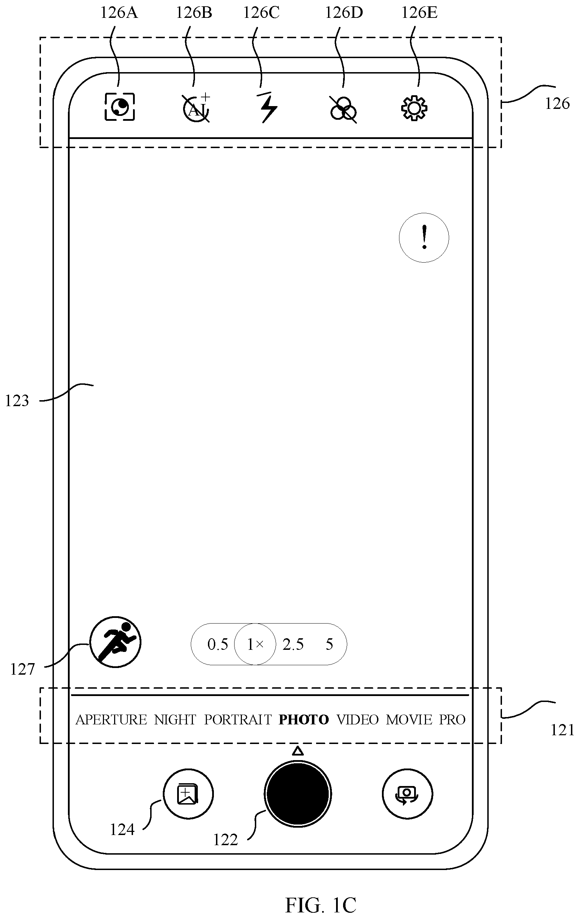

The "highlight capture" option 127 may be used for the user to enable/disable the "highlight capture" function. In the preview interface shown in FIG. 1B, "highlight capture" is disabled. In this case, the photo mode supported by the electronic device is a normal photo mode, and a zoom range supported by a preview stream is from 0.5x to 10x. In the preview interface shown in FIG. 1B, the electronic device may detect a user operation of enabling "highlight capture", for example, an operation of tapping the "highlight capture" option 127. In response to the operation, the electronic device may display the preview interface shown in FIG. 1C.

In the preview interface shown in FIG. 1C, the "highlight capture" option 127 is switched to a display form, for example, display of a deeper color, to indicate that the "highlight capture" function of the electronic device has been enabled. In the "highlight capture" mode, the zoom range supported by the preview stream becomes 0.5x to 5x. Compared to ordinary photographing, "highlight capture" is intended to obtain a highlight frame by performing image evaluation, and a perception algorithm used by "highlight capture" needs to perform frame filtering based on more image details and higher image quality. Therefore, a higher zoom ratio with a significant loss of pixels is not supported. In addition, a function option conflicting with "highlight capture" is disabled, for example, the HDR function option 126A and the AI function option 126B become untouchable, for example, being grayed.

Not limited to a method for enabling the "highlight capture" function of the electronic device as shown in FIG. 1A to FIG. 1C, the user may further enable the "highlight capture" function of the electronic device in other ways, for example, quickly enabling the "highlight capture" function by pulling down the notification bar.

### Enabling auto capture

FIG. 1C to FIG. 1F are examples of a UI that an electronic device enables an "auto capture" function.

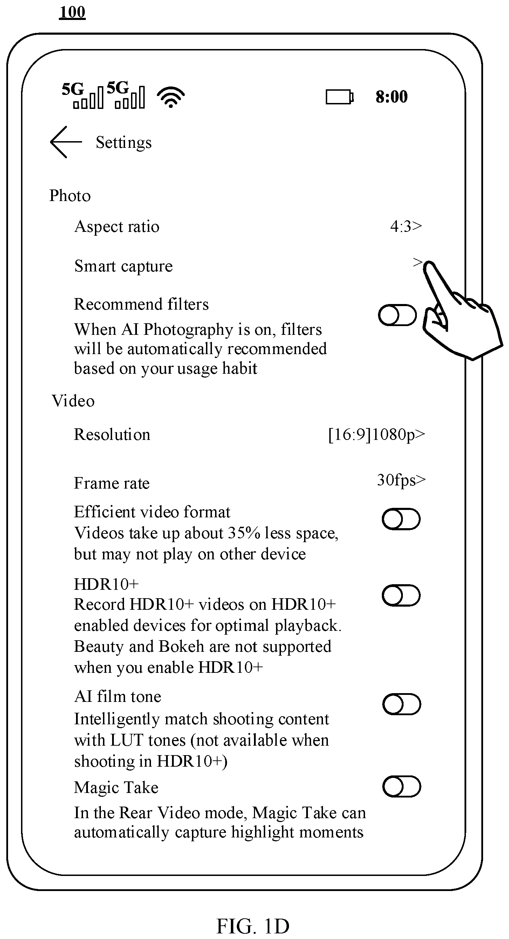

For example, as shown in FIG. 1C, an operation performed on the settings control 126E by the user is detected. In response to the operation, the electronic device may display a user interface shown in FIG. 1D.

The interface may display a plurality of function option controls, such as an "aspect ratio" control, a "smart capture" control, a "resolution" control, a "frame rate" control, and the like, and examples are not listed one by one herein again. The "aspect ratio" control may be used to set an aspect ratio of a captured photo, for example, 4:3 and 9:16. The "smart capture" control may be used to set a special photographing method, for example, audio control capable of taking a photo with a voice, gesture control capable of taking a photo with gesture control, and auto capture provided in embodiments of this application. The "resolution" control may be used to set a resolution of a video, for example, [16:9]1080P. The "frame rate" control may be used to set a frame rate of a video, for example, 30fps.

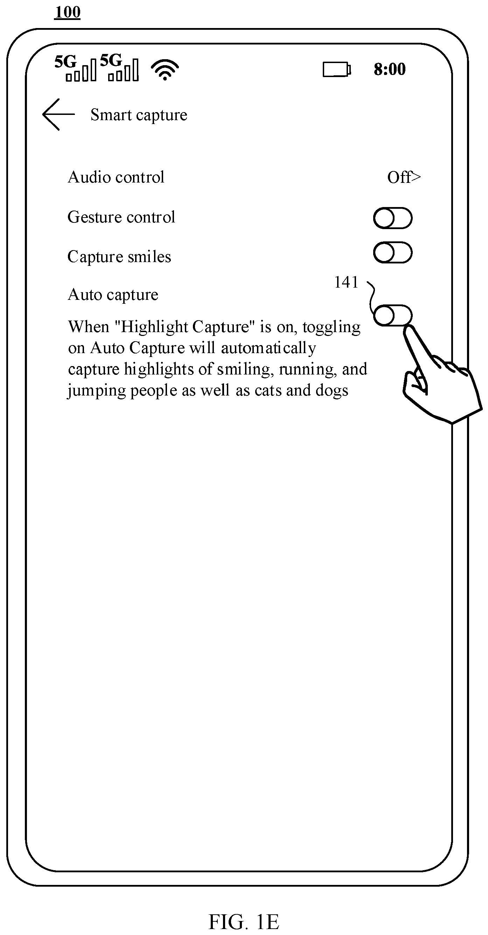

As shown in FIG. 1D, the electronic device may detect a user operation performed by the user on the "smart capture" control. In response to the operation, the electronic device may display a user interface shown in FIG. 1E.

The interface may display a plurality of function option controls under a "smart capture" directory, such as an "audio control" control, a "gesture control" control, a "capture smiles" control, an "auto capture" control, and the like. The "audio control" control may be used to enable or disable audio control, and the "gesture control" control may be used to enable or disable gesture control. The "capture smiles" control may be used to enable or disable capturing smiles. The "auto capture" control may be used to enable or disable the "auto capture" function provided in embodiments of this application.

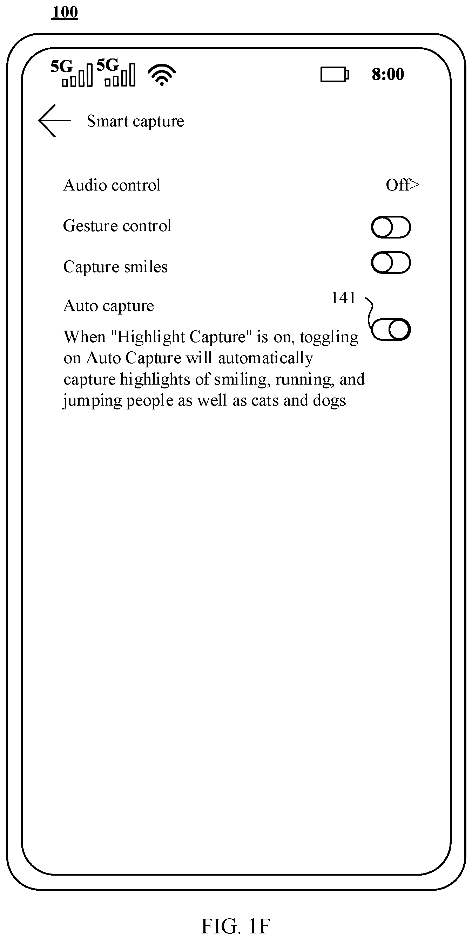

As shown in FIG. 1E, the electronic device may detect a user operation of enabling the "auto capture" function. For example, the user toggles or taps an on/off button 141. In response to the operation, the electronic device may enable the "auto capture" function, and may switch a state of the on/off button 141 from "off (OFF)" to "on (ON)", as shown in FIG. 1F.

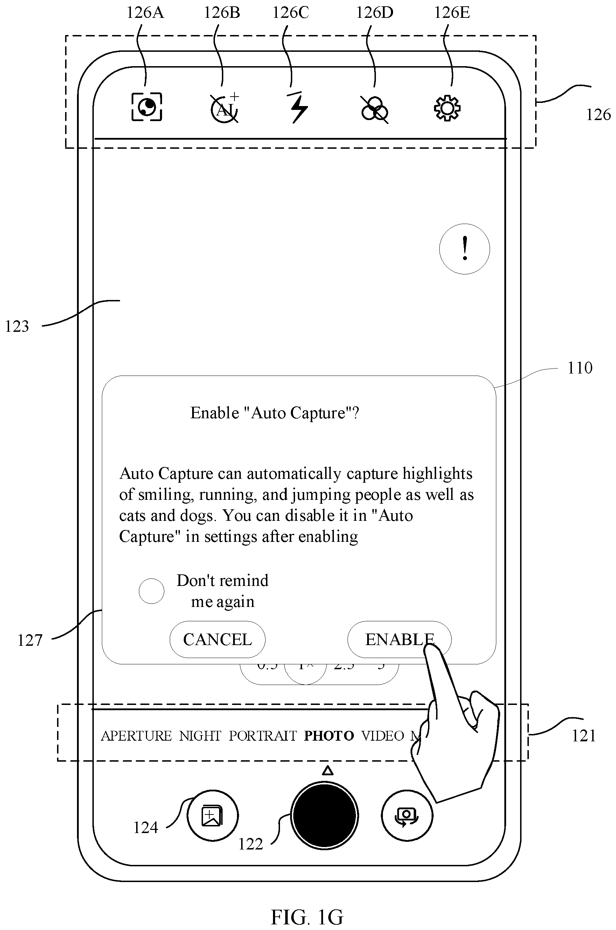

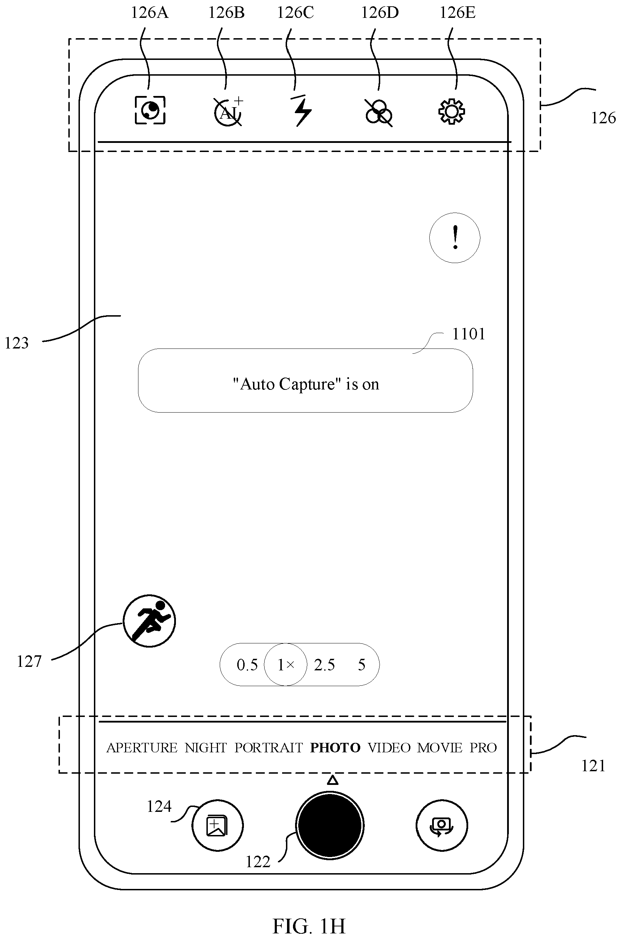

Not limited to the manner for enabling the "auto capture" shown in FIG. 1C to FIG. 1F, the user may further enable the "auto capture" function in a one-button manner. Specifically, after detecting that the user taps the "highlight capture" option 127, the electronic device may display a prompt 110 as shown in FIG. 1G, to ask the user whether to enable "auto capture". In this way, the user may enable "auto capture" by tapping only "confirm". In this case, the electronic device may output an interface shown in FIG. 1H, to prompt the user that "auto capture" has been enabled.

### Auto capture

After "auto capture" is enabled, the electronic device may search for an automatically-captured highlight frame based on a time of auto capture, to generate an automatically-captured highlight photo.

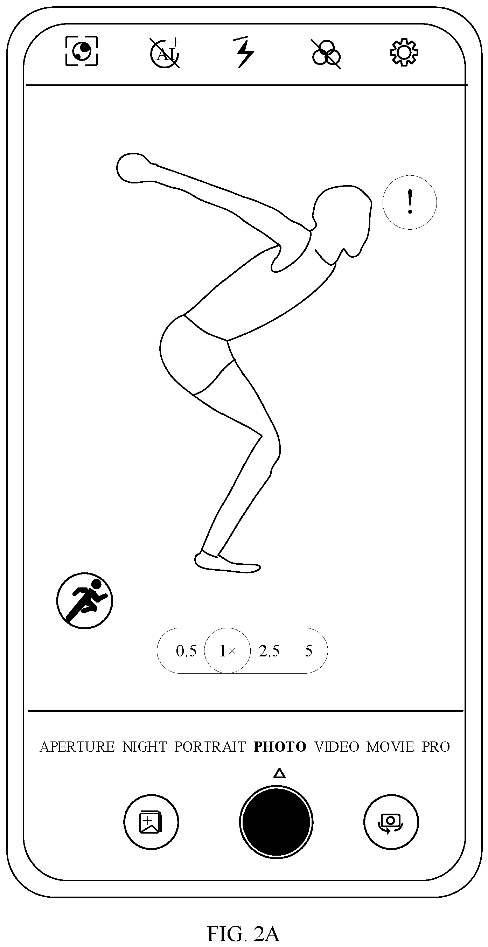

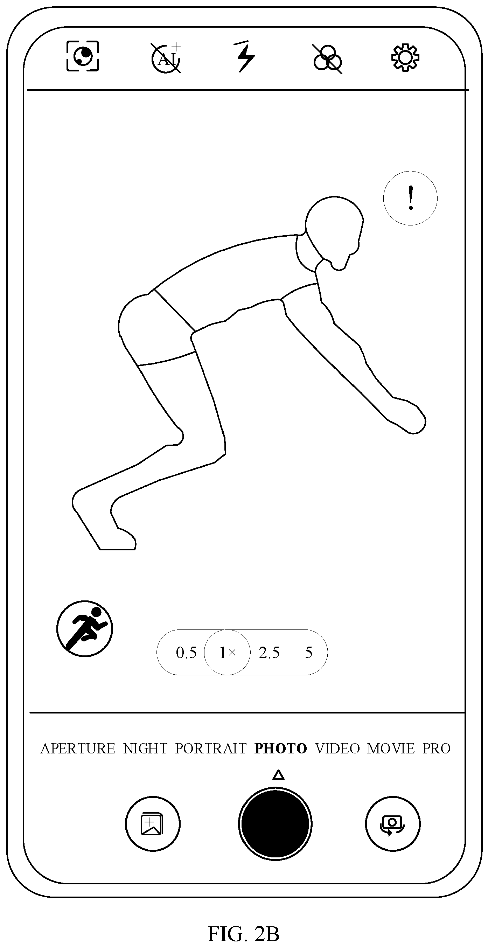

FIG. 2A to FIG. 2H are examples of a UI that a highlight photo is automatically captured. A series of preview images shown in FIG. 2A to FIG. 2E reflect a long jump action of an athlete. When the camera lens focuses on the athlete during long jumping, the electronic device may sequentially display images of the long jump action captured by the camera lens at different moments. For ease of subsequent description, preview frames shown in FIG. 2A to FIG. 2E may be numbered in chronological order as an (i-2)^{th}, an (i-1)^{th} frame, an i^{th} frame, an (i+1)^{th} frame, and an (i+2)^{th} frame. The (i-1)^{th} frame is earlier than the i^{th} frame, but is not limited to 1 frame earlier.

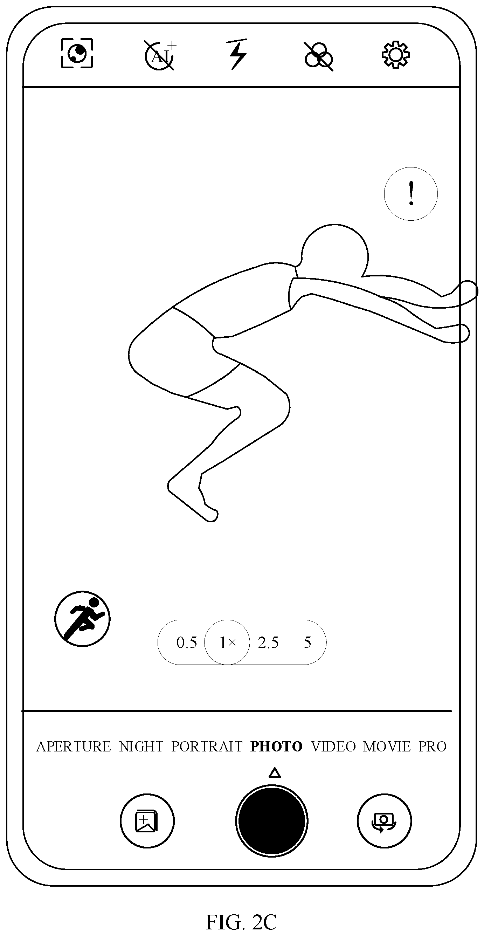

It is assumed that the preview image shown in FIG. 2C, for example, an image that the character jumps up to the highest point, is an image that the user expects to capture. In this case, the user taps the photographing control 122, to capture the image.

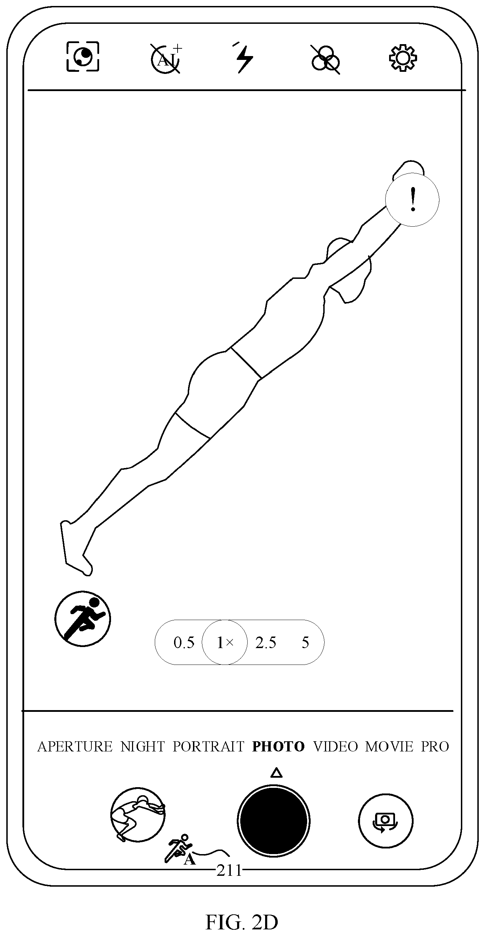

However, due to the reaction time delay of the person, at a time at which the user captures the image, an image displayed by the electronic device in the preview interface has been updated to the image shown in FIG. 2D, for example, an image of the body of the athlete in a flat state. Therefore, the electronic device detects the manual capture action of the user when displaying the preview frame shown in FIG. 2D. The preview frame shown in FIG. 2D is located after the preview frame shown in FIG. 2C. That is, a time at which the electronic device detects the manual capture action is later than a splendid moment that the user expects to capture. In the conventional technologies, the electronic device stores the preview frame shown in FIG. 2D as a photographed photo. However, the preview image shown in FIG. 2D is not the image that the user expects to capture.

In order to resolve the problem, in this embodiment of this application, the electronic device may search for a local optimal frame once every period of time (or a consecutive plurality of frames) backward from a start time of automatic capture. The local optimal frame selected in a period of time (for example, 0.33 seconds) means a preview frame with a highest image evaluation or a preview frame with an image evaluation higher than a specific reference value obtained using a perception algorithm within the period of time or the consecutive plurality of frames. When a local optimal frame is obtained from a preceding consecutive plurality of frames, it is determined whether there is a next local optimal frame in a following consecutive plurality of preview frames; if it is detected that there is the next local optimal frame in the following consecutive plurality of preview frames, a preceding local optimal frame is replaced by a following local optimal frame, and so on; or if it is detected that there is no next local optimal frame in the following consecutive plurality of preview frames, a preceding local optimal frame is donated as the automatically-captured frame.

Optionally, a time limit may be set, to constrain a time at which searching for the automatically-captured highlight frame ends. When there are consecutive local optimal frames after auto capture is enabled, an algorithm module may use the time limit as a constraint, and denote the last local optimal frame before the time limit as the automatically-captured highlight frame instead of searching all the time. In this way, the highlight photo can be fed back as soon as possible. Different time limits may be set for different photographing scenarios. For example, a time limit for a long jump scenario is 3 seconds, and a time limit for a smile scenario is 1 second. The algorithm module may determine the photographing scenario by performing image recognition.

After the automatically-captured highlight frame is found, as shown in FIG. 2D, the electronic device may provide, on the preview interface, feedback to the user that the automatically-captured highlight photo has been captured, for example, display a thumbnail corresponding to the automatically-captured highlight photo in the playback control 124, that is, refresh the thumbnail in the preview interface to the thumbnail corresponding to the automatically-captured highlight photo. To distinguish from a manually-captured thumbnail, the electronic device may display a prompt mark 211 near the thumbnail corresponding to the automatically-captured highlight photo, to prompt the user that the electronic device automatically captures the highlight photo.

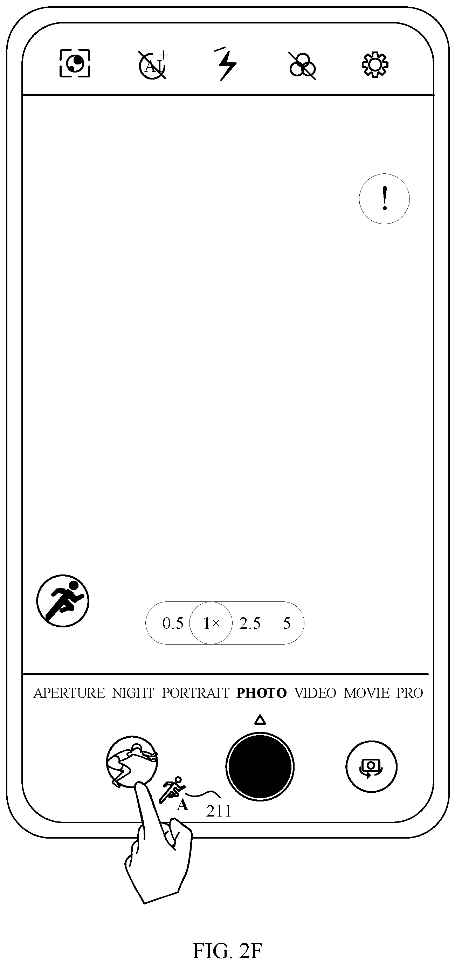

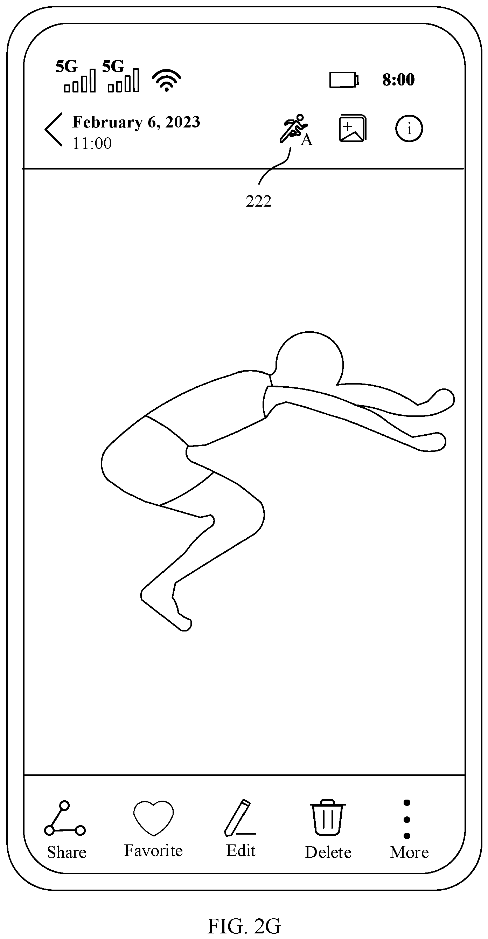

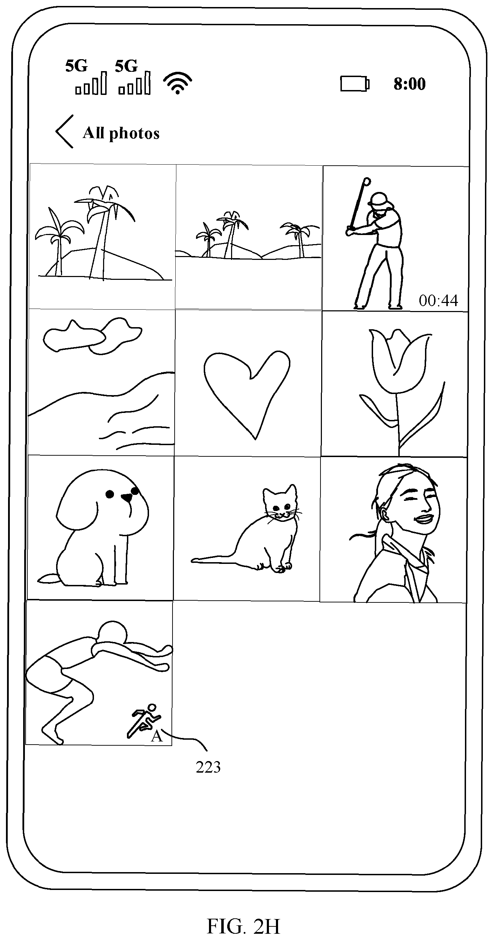

Subsequently, the user may view the highlight photo via an updated thumbnail. As shown in FIG. 2F, the electronic device may detect an operation of opening the automatically-captured highlight photo via the updated thumbnail, for example, tapping the updated thumbnail, and in response to this, may open an interface shown in FIG. 2G. The interface is a full-size image display interface of the gallery, and displays the automatically-captured highlight photo and a mark 222. The mark 222 is used to mark that the photo is generated by auto capture, to distinguish from a photo generated by manual capture. Not limited thereto, the user may alternatively open the user interface of the gallery shown in FIG. 2H first, and then select to view the automatically-capture highlight photo. The user interface shown in FIG. 2H is used to display a thumbnail corresponding to a full-size image in the gallery, and the thumbnail is generally larger than the thumbnail displayed in the preview interface. There may be a mark 223 on the thumbnail corresponding to the automatically-captured highlight photo, to mark that the photo is generated by auto capture, and distinguish from the photo generated by manual capture.

### Manual capture

After "auto capture" is enabled, the user may still manually capture a photo.

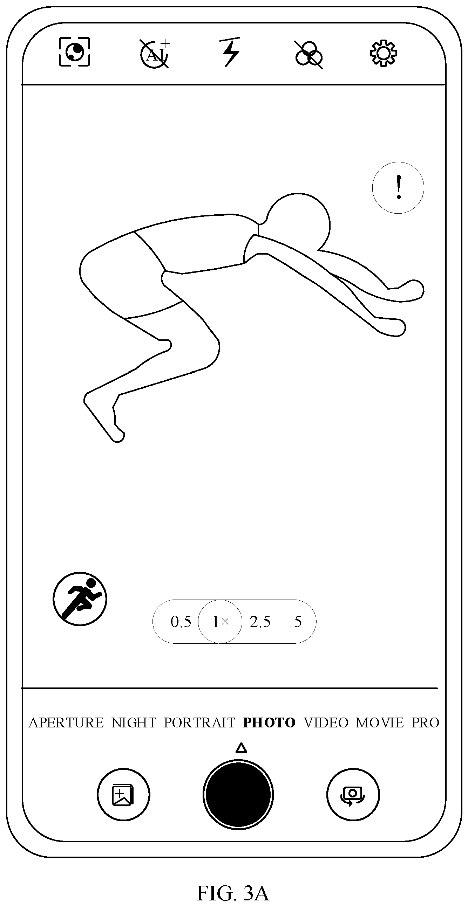

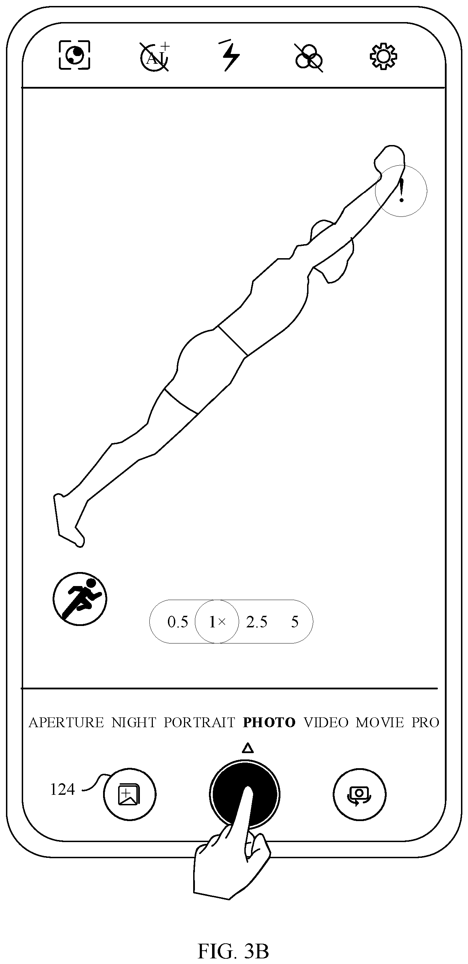

As shown in FIG. 3B, the electronic device may detect, when displaying the i^{th} frame of the preview image, a manual capture action, for example, tapping a shutter 122. In response to this, the electronic device may decide, based on the time of manual capture, a highlight frame, for example, the (i-1)^{th} frame of image shown in FIG. 3A, from preview frames captured at times within a short time period before and after manual capture, and may store the highlight frame as a manually-captured highlight photo.

Here, "times within a short time period before and after manual capture" may mean times earlier and/or later than the time of manual capture, with a small time interval. For example, within 1 second before manual capture and within five seconds after manual capture. A time within a short time period before manual capture may be limited based on a duration threshold, that is, the time is before manual capture but a time interval between the time and the time of manual capture is less than a first duration, for example, within 1 second before manual capture. A time within a short time period after manual capture may also be limited based on a duration threshold, that is, the time is after manual capture but a time interval between the time and the time of manual capture is less than a second duration, for example, within 0.5 seconds after manual capture. The first duration may also be equal to the second duration.

A splendid moment recognized by the electronic device based on a specific intelligent algorithm (the perception algorithm provided in this specification) is overlapped with or close to the splendid moment recognized by the user. Therefore, a selection range of the highlight frame is not far away from the time interval of manual capture. Particularly, the algorithm may be more close to consciousness of the user after being trained repeatedly, and the recognized splendid moment is more close to a splendid moment recognized by the user. Subsequent embodiments will describe how to decide the highlight frame using the algorithm, which is not described herein.

Values of the first duration and the second duration may be intelligently selected based on the photographing scenario. For example, in a photographing scenario in which images change quickly, the first duration and the second duration may be small, because a specific highlight image is not continuously captured. On the contrary, in a photographing scenario in which images change slowly, the first duration and the second duration may be large, because a specific highlight image may be continuously captured.

One implementation is that the manually-captured highlight frame stored as the highlight photo may be decided from the preview frames at the short time before manual capture (for example, within 1 second before manual capture) and the short time after manual capture (for example, within 0.5 seconds after manual capture). Subsequent embodiments will describe a specific implementation of decision-making, which is not described herein.

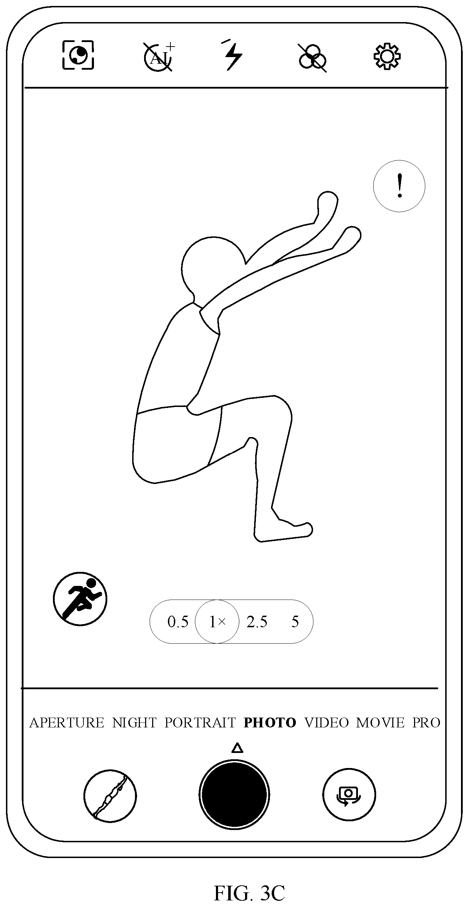

In addition, as shown in FIG. 3C, the electronic device may further update a thumbnail displayed on the playback control 124, to feed back manual capture of the user on the preview interface, thereby enabling the user to feel that capture occurs.

In order to quickly feed back a capture result to the user and optimize the capture result, the thumbnail may be updated in two steps. Step 1: Generate a first manually-captured thumbnail based on the preview frame during manual capture, and refresh and display the first manually-captured thumbnail. Step 2: Generate a second manually-captured thumbnail based on the decided manually-captured highlight frame, add the second manually-captured thumbnail to a full-size image of the manually-captured highlight frame, and refresh and display, after the camera application is enabled again, the second manually-captured thumbnail in the preview interface. The manually-captured highlight frame is comprehensively decided from the preview frames captured at the short time before manual capture (for example, within 1 second before manual capture) and the short time after manual capture (for example, within 0.5 seconds after manual capture).

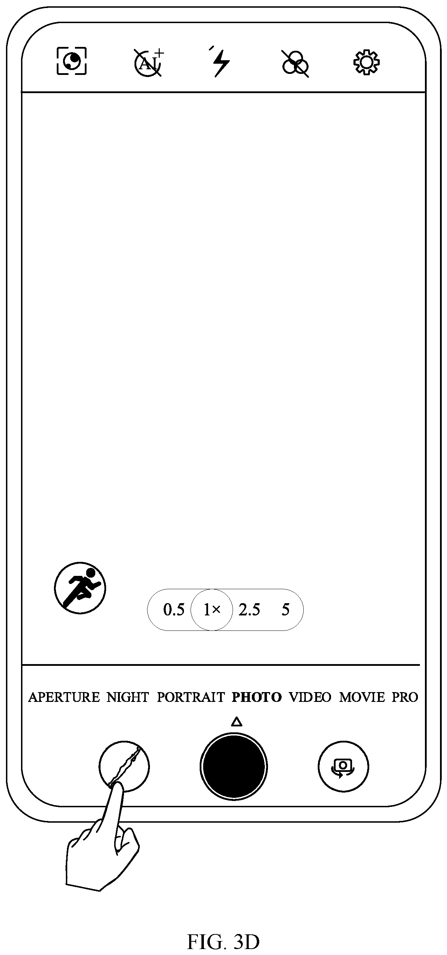

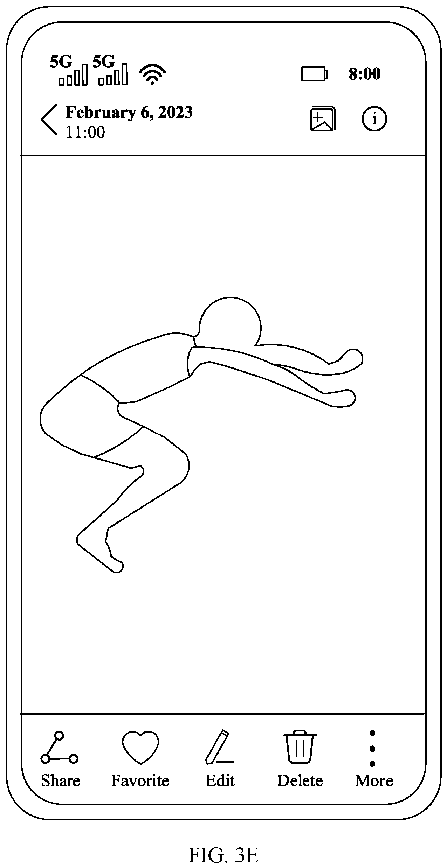

Subsequently, the user may view the manually-captured highlight photo by jumping in the gallery via the first manually-captured thumbnail. That is, when the first manually-captured thumbnail jumps to the manually-captured highlight photo, the user may feel the jump in image content. As shown in FIG. 3D, the electronic device may detect that the user taps the first manually-captured thumbnail (for example, a thumbnail of the body of the athlete in the flat state), and in response to this, the electronic device may open an interface shown in FIG. 3E. The interface is a full-size image display interface of the gallery, and displays the manually-captured highlight photo (for example, a thumbnail that the athlete jumps to a highest point).

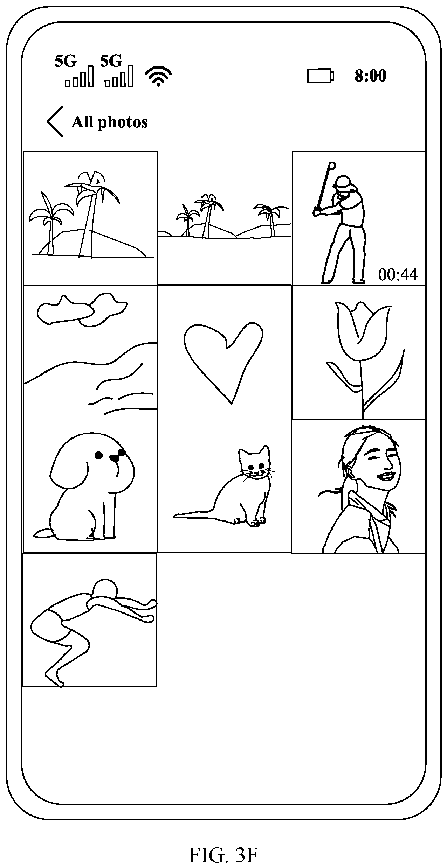

In addition, after the user exits the camera application and enables the camera application again, the electronic device may display the thumbnail in the preview interface as the second manually-captured thumbnail, instead of the first manually-captured thumbnail. Not limited to this, the user may also first open the user interface of the gallery shown in FIG. 3F. The thumbnail displayed is the second manually-captured thumbnail, instead of the first manually-captured thumbnail. The thumbnail in the gallery is extracted from a full-size image in the gallery.

**Not limited to the above preview scenario, the user may also implement manual capture in a video recording scenario.**

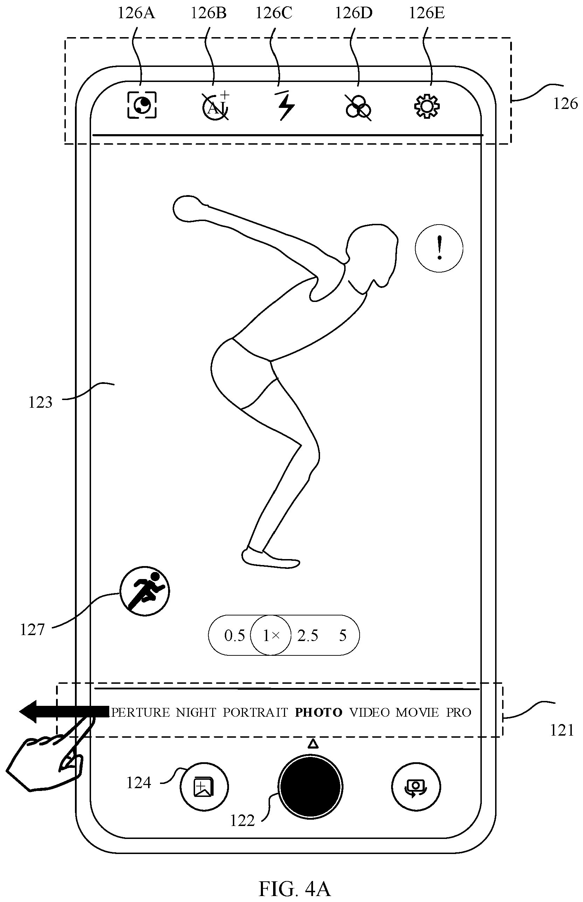

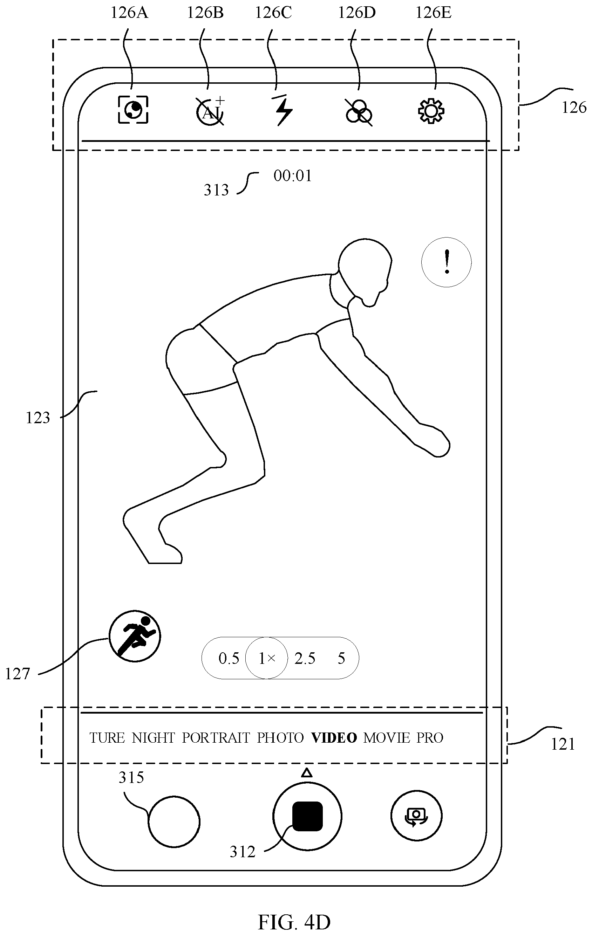

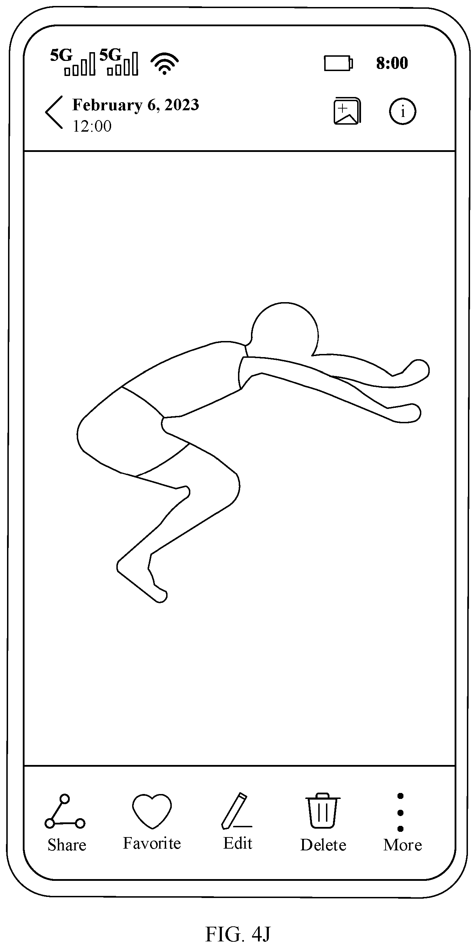

FIG. 4A to FIG. 4F are schematic diagrams in which an electronic device manually captures a highlight photo in a "Video" mode.

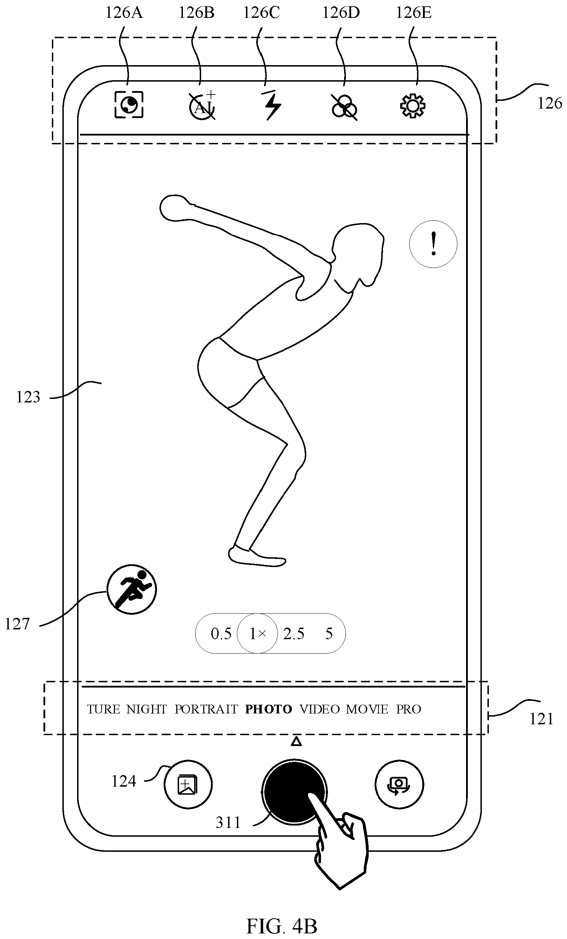

As shown in FIG. 4A, the electronic device may detect a leftward swiping operation performed on the mode bar 121. In response to the operation, the electronic device may switch from the "photo" mode to the "video" mode, as shown in FIG. 4B. As shown in FIG. 4B, in the "video" mode, the electronic device may switch a preview interface corresponding to an original "photo" mode to a preview interface corresponding to an original "video" mode. Specifically, the electronic device may switch the photographing control 122 of the original "photo" mode to a video recording start control 311 of the "video" mode.

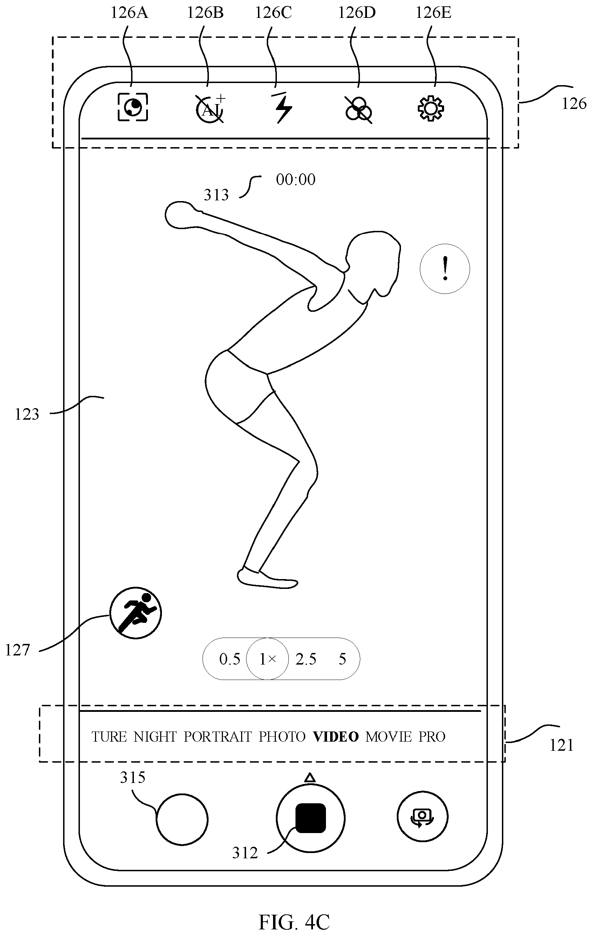

As shown in FIG. 4B, the electronic device may detect a user operation performed on the video recording start control 311. In response to the operation, the electronic device may start video recording. Correspondingly, the electronic device may display a video recording interface shown in FIG. 4C. The electronic device may switch the original video recording start control 311 to a video recording end control 312. In addition, the electronic device may display a time stamp control 313 in the preview window 123, for indicating a recording duration. A video recording interface shown in FIG. 4C may further include a "highlight capture" option 127 and a control 315. The "highlight capture" option 127 may be used for the user to enable/disable the "highlight capture" function. The control 315 may be used for the user to receive a photographing operation during the video recording, to trigger manual capture.

FIG. 4C to FIG. 4G are examples of a group of video recording interfaces displayed by an electronic device during recording of a long jumper. The preview window 123 may sequentially display action states of the athlete photographed by the camera lens at different times during long jumping. The time stamps control 313 may be updated when a recording duration is increased.

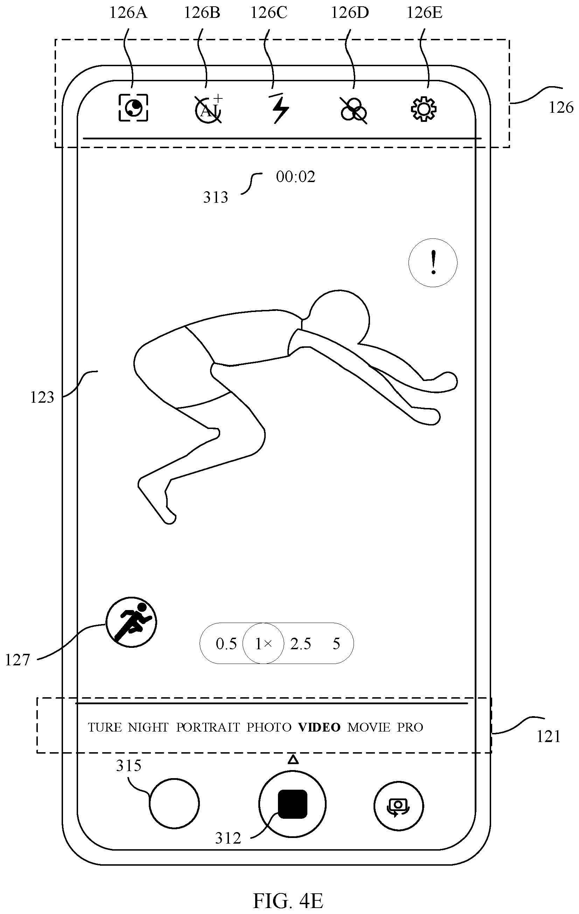

It is assumed that the preview image shown in FIG. 4E, for example, an image that the character jumps up to the highest point, is an image that the user expects to capture. In this case, the user taps the photographing control 315, to capture the image during video recording. Previously, the user enables the "highlight capture" function via the "highlight capture" option 127.

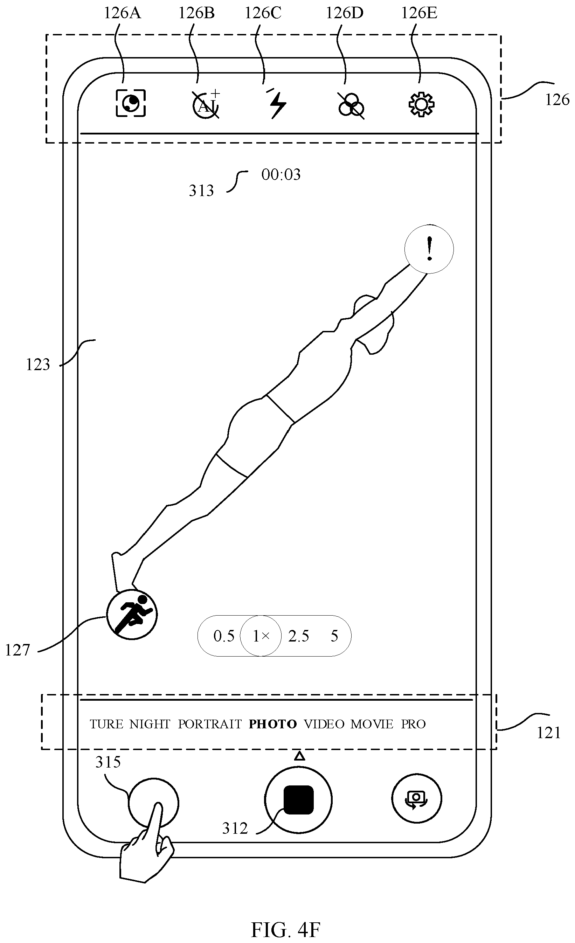

However, due to the reaction time delay of the person, the electronic device detects that a time of the manual capture action is later than a splendid moment at which the user expects to capture. Therefore, the electronic device detects the manual capture action of the user when displaying the preview frame shown in FIG. 4F. However, the image shown in FIG. 4F is not the image that the user expects to capture.

In view of this, the electronic device may further recognize a capturing intention of the user to the image during video recording. In this way, after the manual capture, the electronic device may provide a highlight photo meeting an expectation of highlight capture of the user. For the scheme for manually capturing a highlight photo in the video recording scenario, refer to the scheme for manually capturing a highlight photo in the preview scenario described above. Details are not described herein again.

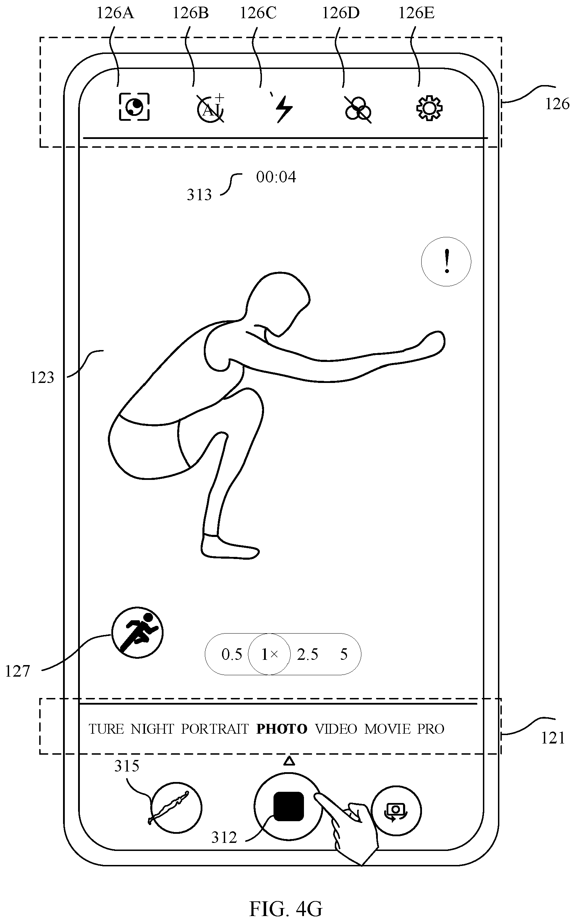

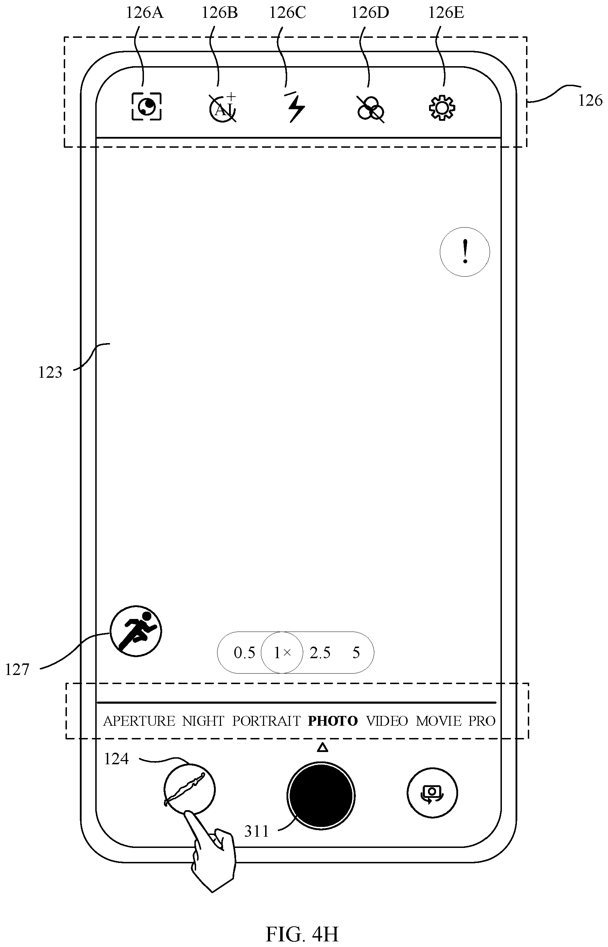

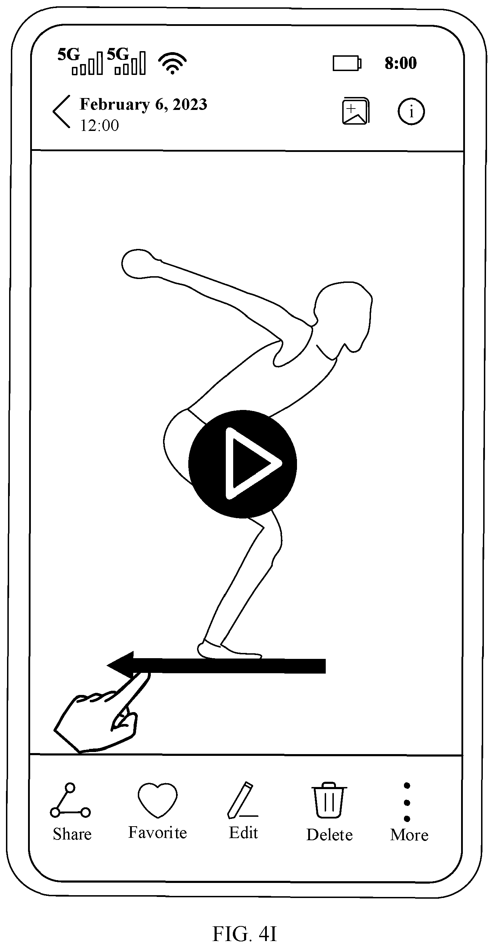

The user may end video recording via the video recording end control 312 in the video recording interface shown in FIG. 4G. After video recording, the electronic device may display the user interface shown in FIG. 4H, that is, existing the video recording interface, and redisplaying the preview interface, including redisplaying the video recording start control 311 replacing the end video recording control 312, and redisplaying the playback control 124 replacing the control 315. The playback control 124 supports the user to view a video that is recorded, and a highlight photo manually captured during video recording. As shown in FIG. 4H, the electronic device may detect an operation that the user taps the playback control 124, and may display the user interface shown in FIG. 4I in response to the operation. A latest recorded video is displayed in the user interface shown in FIG. 4I. After detecting a switch operation for viewing forward in the user interface shown in FIG. 4I, for example, a leftward swiping, the electronic device may switch content displayed in the user interface shown in FIG. 4I from the latest recorded video to a highlight photo manually captured during video recording.

Not limited to viewing the highlight photo via the playback control 124, the user may also first open the user interface of the gallery shown in FIG. 2H, and then may select to view the highlight photo manually captured during video recording.

### Conflict between auto capture and manual capture

When "auto capture" is enabled, the user is allowed to perform manual capture. This may result in the following case: In a process of generating the automatically-captured highlight photo through packing, manual capture is also triggered.

In this case, specifically, generation of the automatically-captured highlight photo is earlier than generation of the manually-captured highlight photo, for example, 50 milliseconds earlier. However, generation of the manually-captured thumbnail is earlier than generation of the automatically-captured highlight photo, because the manually-captured thumbnail is generated without data packing processing, and may be directly extracted from the decided manually-captured highlight frame, while the highlight photo needs to be generated through a time-consuming data packing process. A difference from the manually-captured thumbnail lies in that the automatically-captured thumbnail is extracted from the automatically-captured highlight photo. This means that the automatically-captured thumbnail is generated after the data packing process. Therefore, generation of the manually-captured thumbnail is earlier than generation of the automatically-captured thumbnail. For generation and display logic of the automatically-captured thumbnail, and generation and display logic of the manually-captured thumbnail, refer to subsequent embodiments, and details are not described herein.

It is clarified that a time stamp of the (manually-captured or automatically-captured) thumbnail means a generation time of the thumbnail. It can be learned from the above that, although the time stamp of the manually-captured thumbnail is later than a time stamp of the automatically-captured highlight photo, the time stamp of the manually-captured thumbnail is earlier than the time stamp of the automatically-captured thumbnail, because the automatically-captured thumbnail is extracted from an automatically-captured full-size image (for example, the highlight photo) after the full-size image is generated.

In addition, the time stamp of the (manually-captured or automatically-captured) highlight photo is the same as a time stamp of the highlight frame, and is generated by the camera device.

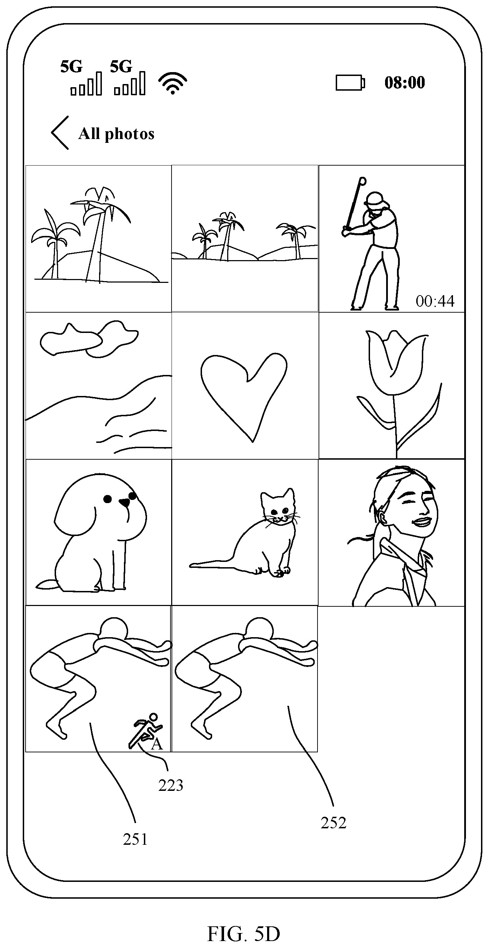

In this case, the electronic device may decide the manually-captured highlight frame based on a time of manual capture, and store the manually-captured highlight frame as the manually-captured highlight photo in response to manual capture of the user. Further, the electronic device may further store an automatically-captured highlight photo generated previously. In this way, the user can view two newly stored highlight photos in the gallery, such as a photo 251 and a photo 252 in FIG. 5D. The photo 251 is the automatically-captured highlight photo having the marker 223, and the photo 252 is the manually-captured highlight photo that is later than photo 251 in chronological order.

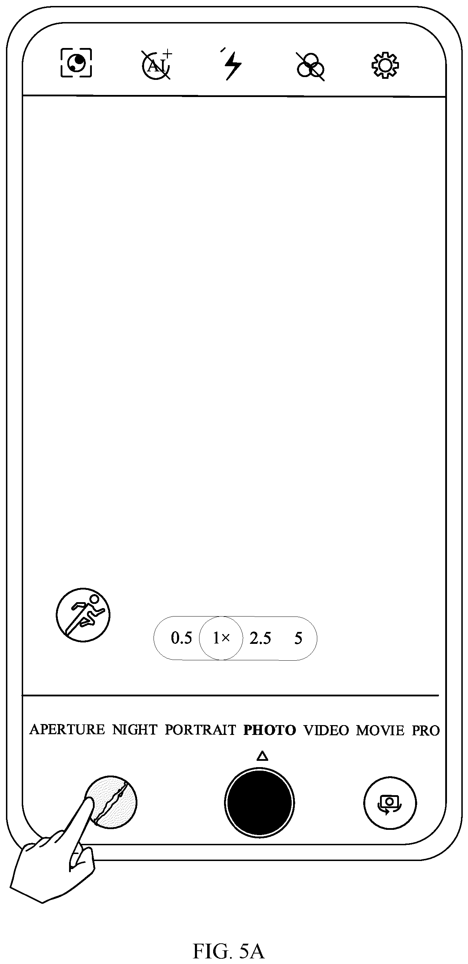

As described above, the automatically-captured thumbnail is generated only after data packing processing is performed. This is equivalent that a display opportunity is delayed by data packing. To be specific, the manually-captured thumbnail that does not need to wait for data packing processing takes the opportunity. In view of this, as shown in FIG. 5A, the electronic device may refresh and display only the manually-captured thumbnail generated first, but does not refresh and display the automatically-captured thumbnail generated later. This may resolve a timing conflict problem that the time stamp of the automatically-captured thumbnail is earlier than the time stamp of the manually-captured thumbnail but the manually-captured thumbnail is displayed earlier, to avoid confusion that the user views the manually-captured thumbnail refreshed first and then views the automatically-captured thumbnail refreshed in the preview interface, but views the automatically-captured highlight photo before the manually-captured highlight photo in the gallery.

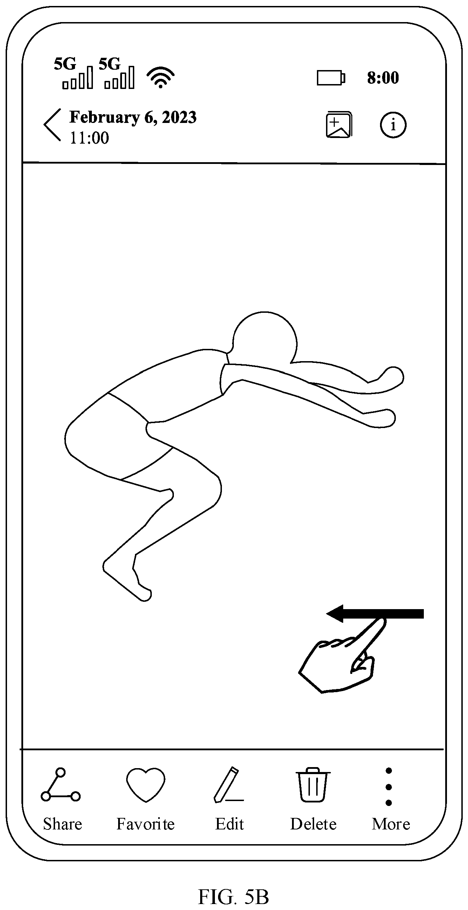

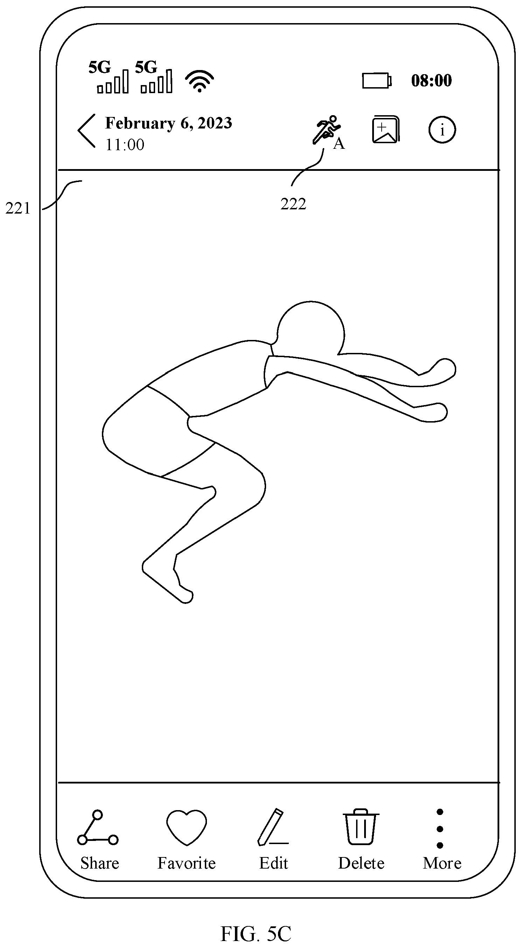

The user may view the manually-captured photo via the thumbnail as a portal. As shown in FIG. 5A, when an operation that the user taps the playback control 124 is detected, the playback control 124 displays the thumbnail of the manually-captured highlight photo, and the electronic device may display a user interface for browsing a recent photo in the gallery shown in FIG. 5B. The user interface shown in FIG. 5B shows the highlight photo manually captured by the user. After a switch operation of viewing forward in the user interface shown in FIG. 5B, for example, leftward swiping, is detected, the electronic device may switch content displayed in the user interface shown in FIG. 5C to the automatically-captured highlight photo from the manually-captured highlight photo.

**Then, the following describes a form, hardware architecture, and software architecture of the electronic device provided in embodiments of this application.**

The electronic device may be a portable terminal device equipped with iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (AR), a virtual reality (VR) device, an artificial intelligence (artificial intelligence, AI) device, a wearable device, an in-vehicle device, a smart home device, and/or a smart city device.

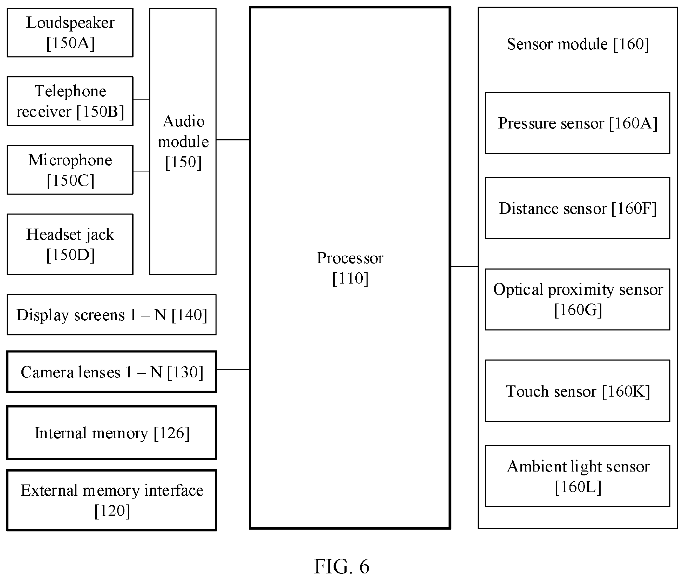

**FIG. 6** **is an example of a hardware structure of an electronic device according to an embodiment of this application.** As shown in FIG. 6, the electronic device 100 may include: a processor 110, an external memory interface 120, an internal memory 126, a camera lens 130, a display screen 140, an audio module 150, a loudspeaker 150A, a telephone receiver 150B, a microphone 150C, a headset jack 150D, and a sensor module 160. The sensor module 160 may include a pressure sensor 160A, a distance sensor 160F, an optical proximity sensor 160G, a touch sensor 160K, an ambient light sensor 160L, and the like.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a memory, a video encoder and decoder, a digital signal processor (Digital Signal Processor, DSP), a baseband processor, and/or a neural-network processing unit (Neural-network Processing Unit, NPU). Different processing units may be independent devices, or may be integrated into one or more processors.

The controller may be a nerve center and a command center of the electronic device. The controller may generate an operation control signal based on instruction operation code and a timing signal, to complete control of fetching an instruction and executing the instruction.

A memory may also be disposed in the processor 110, and is configured to store instructions and data. In some embodiments, the memory in processor 110 is a cache memory. The memory may store instructions or data that is just used or used cyclically by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

In this embodiment of this application, the processor 110 may be configured to run the camera application. The processor 110 is used to control various modules in the camera application to perform the highlight capture function described in foregoing embodiments, and implement the method flow of capturing the highlight frame via the manually triggering operation, to implement the photographing method provided in this application.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiments, or use a combination of a plurality of interface connection manners.

The internal memory 126 may include one or more random access memories (random access memories, RAMs) and one or more non-volatile memories (non-volatile memories, NVMs).

The random access memories may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as DDR5 SDRAM), and the like.

The non-volatile memories may include a magnetic disk storage device and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to an electrical potential level of a storage unit, or may be divided into a universal flash storage (universal flash storage, UFS), an embedded multimedia card, (embedded multi media Card, eMMC), and the like according to a storage specification.

The random access memory may be directly read and written by the processor 110, may be configured to store an executable program (for example, machine instructions) of an operating system or another running program, or may be configured to store data of a user and an application.

The non-volatile memory may also store the executable program, the data of the user and the application, and the like, and may be loaded in advance into the random access memory in advance for the processor 110 to perform direct reading and writing.

The external memory interface 120 may be configured to connect to an external non-volatile memory, to expand a storage capability of the electronic device. The external nonvolatile memory communicates with the processor 110 through the external memory interface 120, to implement a data storage function, for example, storing a file such as music or a video in the external non-volatile memory.

In this embodiment of this application, a computer program code corresponding to highlight capture may be stored in the NVM. After the highlight capture function is enabled, the corresponding program code may be loaded into the RAM. The processor 110 may directly read the program code in the RAM, to implement the highlight capture function. In addition, the highlight frame (also referred to as a highlight image) obtained using the highlight capture function and a corresponding image file such as a thumbnail may be written to the NVM for storage, for viewing by the user.

The electronic device implements a display function by using a GPU, the display screen 140, an application processor, and the like. The GPU is a microprocessor for image processing and connects the display screen 140 to the application processor. The GPU is configured to perform mathematical and geometric computing for graphics rendering. The processor 110 may include one or more GPUs that perform program instructions to generate or change display information.

The display screen 140 is configured to display an image, a video, and the like. The display screen 140 may include a display panel. A liquid crystal display (liquid crystal display, LCD) may be used as the display panel. The display panel may alternatively be manufactured by using an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-OLED, a quantum dot light emitting diode (quantum dot light emitting diode, QLED), or the like. In some embodiments, the electronic device may include 1 or N display screens 140. N is a positive integer greater than 1.

The electronic device may implement a photographing function through the ISP, the camera lens 130, the video encoder and decoder, the GPU, the display screen 140, the application processor, and the like.

The ISP is configured to handle data fed back by the camera lens 130. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise and brightness of the image. The ISP may further optimize parameters such as exposure and a color temperature of a shooting scenario. In some embodiments, the ISP may be provided in the camera lens 130.

The camera lens 130 is configured to capture a still image or video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include one or N camera lenses 130. N is a positive integer greater than 1.

In this embodiment of this application, the camera lens 130 may include: a telephoto camera lens, a main camera lens, or a wide-angle camera lens.

The digital signal processor is configured to process a digital signal, and may further process another digital signal in addition to the digital image signal. For example, when the electronic device performs a frequency selection, the digital signal processor is configured to perform Fourier transform or the like on frequency energy.

The video encoder and decoder are configured to compress or decompress a digital video. The electronic device may support one or more video encoders and decoders. Therefore, the electronic device may play or record videos in a plurality of encoding formats, such as moving picture experts group (moving picture experts group, MPEG)1, MPEG2, MPEG3, and MPEG4.

The NPU is a neural-network (neural-network, NN) computing processor that quickly processes input information by referring to a biological neural network structure, for example, by referring to a transmission mode between human brain neurons, and may further perform self-learning continuously. By using the NPU, intelligent cognition and another application of the electronic device, such as image recognition, facial recognition, voice recognition, and text understanding, can be implemented. Image recognition includes, for example, recognizing a person, an animal, an action, and the like, and is used to determine whether conditions for an automatic capture scenario are met.

The electronic device may implement an audio function through the audio module 150, the loudspeaker 150A, the telephone receiver 150B, the microphone 150C, the headset jack 150D, the application processor, and the like. For example, music playing and sound recording are implemented.

The audio module 150 is configured to convert digital audio information into an analog audio signal output, and also configured to convert an analog audio input into a digital audio signal. The audio module 150 may be further configured to encode and decode the audio signal. In some embodiments, the audio module 150 may be arranged in the processor 110, or some function modules of the audio module 150 are arranged in the processor 110.

The loudspeaker 150A, also referred to as "horn", is configured to convert an electrical audio signal into a sound signal. The electronic device can allow listening to music or answering a hands-free call through the speaker 150A.

The telephone receiver 150B, also referred to as "earpiece", is configured to convert an electrical audio signal into a sound signal. When a call is answered or a voice message is listened to by using the electronic device, the telephone receiver 150B may be put close to a human ear to listen to a voice.

The microphone 150C, also referred to as a "voice tube" or "mike", is configured to convert a sound signal into an electrical signal. When making a call or sending a voice message, a user may make a sound by approaching the mouth to the microphone 150C, to input a sound signal to the microphone 150C. At least one microphone 150C may be disposed on the electronic device. In other embodiments, the electronic device may be provided with two microphones 150C, to implement a noise reduction function in addition to collecting sound signals. In other embodiments, the electronic device may alternatively be provided with three, four, or more microphones 150C to collect the sound signals, reduce noise, identify sound sources to implement a directional recording function, and the like.

The headset jack 150D is configured to connect a wired headset. The headset jack 150D may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The structure shown in this embodiment of this application does not constitute a specific limitation on the electronic device. In some other embodiments of this application, the electronic device may include more or fewer assemblies than those shown in the figures, combine some assemblies, split some assemblies, or differently arrange assemblies. The components shown in the figures may be implemented as hardware, software, or their combination. For example, the electronic device may further include a button, a motor, an indicator, and a subscriber identification module (subscriber identification module, SIM) card interface, and the like. For another example, the sensor module may further include: a gyro sensor, a barometric pressure sensor, a magnetic sensor, an acceleration sensor, a fingerprint sensor, a temperature sensor, a bone conduction sensor, and the like.

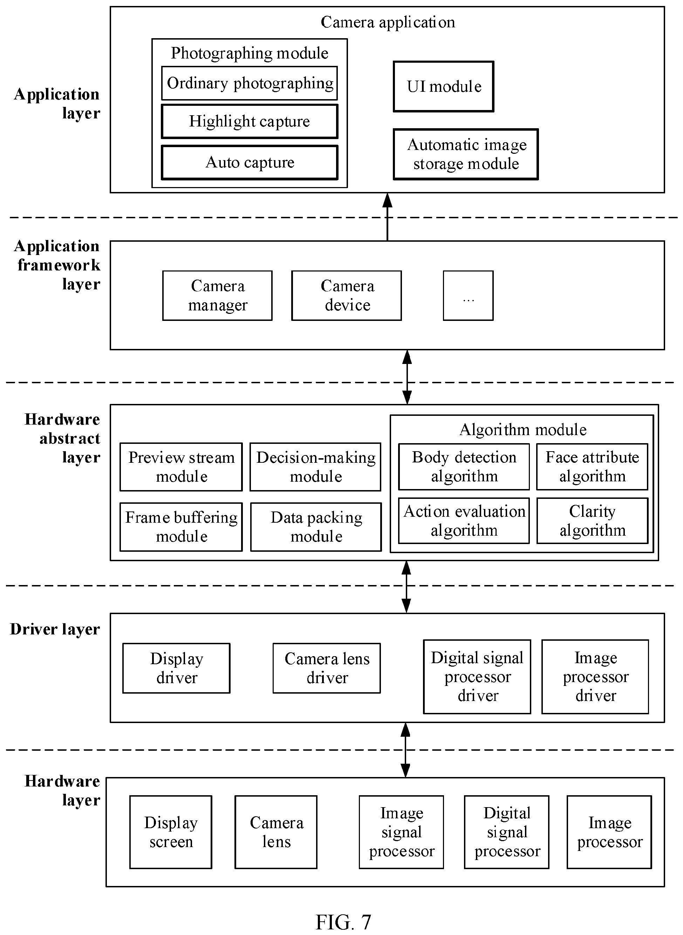

**FIG. 7** **is an example of a software architecture of an electronic device according to an embodiment of this application.** As shown in FIG. 7, a layered architecture divides a system into several layers, and each layer has a clear function and task. The layers communicate with each other through software interfaces. In some embodiments, the system is divided into five layers: an application layer, an application framework (framework) layer, a hardware abstract layer (hardware abstract layer, HAL), a drive layer, and a hardware layer from top to bottom.

An application (application) layer may include a series of application packages. For example, an application package may include applications such as a camera application and a gallery not shown. The camera application may include, but is not limited to: a UI module, a photographing module, an automatic image storage module, and the like. The UI module may be a cameraUI module of a camera in other embodiments of this specification, and may be mainly responsible for a human-computer interaction of the camera application, for example, controlling the preview interface, displaying the preview image in the preview interface, and monitoring and responding to a user operation performed in the preview interface. The photographing module may include: an ordinary photographing module, a highlight capture module and an auto capture module, and may be configured to provide an ordinary photographing function, a highlight capture function, an auto capture function, and the like. Compared to the ordinary photographing function, the highlight capture function may recognize a capturing intention of the user in advance, may more quickly output highlight capture feedback to the user on the interface, and may support the provision of the highlight photo that meets an expectation of the user. For implementation of highlight capture, refer to other embodiments in this specification. Details are not described herein again. The auto capture module may be configured to search for the automatically-captured highlight frame from a time of enabling auto capture, to provide the automatically-captured highlight photo to the user. The image storage module may be configured to store the highlight photo manually captured by the user in a file system of the electronic device or in a specific database, for invoked by applications such as the gallery.

The application framework (framework) layer may mainly relate to a camera framework, and may include: a camera access interface for camera management and a camera device, as a connecting link between the preceding and the following. The application framework layer may interact with the camera application via an application program interface (application program interface, API), and may interact with the HAL via a HAL interface definition language (HAL interface definition language, HIDL).

The hardware abstract layer (HAL) is an interface layer located between the application framework layer and the driver layer, and provides a virtual hardware platform for an operating system. The HAL may include modules such as a preview stream module, a frame buffering module, a decision-making module, a data packing module, and an algorithm module. For implementation of the modules, refer to other embodiments in this specification. Details are not herein again.

The driver layer is a layer between hardware and software. The driver layer includes various hardware drivers. The driver layer may include a camera lens driver, a digital signal processor driver, and a graphics processing unit driver. The camera lens driver is configured to drive an image sensor of one or more camera lenses in the camera lens module to capture an image, and drive an image signal processor to pre-process the image. The digital signal processor driver is configured to drive a digital signal processor to process the image. The graphics processing unit driver is configured to drive a graphics processing unit to process the image.

The hardware layer may include a camera lens module, an image signal processor, a digital signal processor, and an image processor. The camera lens module may include an image sensor of one or more camera lenses (for example, an image sensor 1, an image sensor 2, and the like). Optionally, the camera lens module may further include a time of flight (time of flight, TOF) sensor, a multi-spectral sensor, and the like.

In addition, the algorithm module in this embodiment of this application may be coupled with a library of camera algorithms, and the library of camera algorithms may include image evaluation algorithms in other parts of this specification. The image evaluation algorithm includes, but is not limited to: a body detection algorithm, a face attribute algorithm, an action evaluation algorithm, a face evaluation algorithm, and a clarity algorithm.

The body detection algorithm may be used to detect a specific photographed object in an image, for example, a person, a cat, a dog, and the like, and may further be used to acquire localizations of the objects, such as a human face, a cat face, a dog face. After detecting the specific photographed object, the algorithm module may mark a size and position of the object in the image, and may evaluate the image based on the size and position of the image. For example, when the object occupies a larger and center position, a score for the object in the image is higher.

The face attribute algorithm may be used to recognize face information in the image, for example, whether a person opens eyes or smiles, and the like, further determine face performance based on the face information, and output a face performance score that reflects the face performance in the image. For example, when a face performance score corresponding to opening the eyes is higher, a face performance score corresponding to smiling is higher.

The action evaluation algorithm may be used to recognize an action of the photographed object, for example, jumping, looking back, throwing, playing a ball, running, splashing, throwing a frisbee, and the like, determine a degree of completion of an action in a current image based on an optimal completion point of each type of behavior, and output an action score of the image. When the degree of completion of the action is higher, a corresponding action score is higher. For example, jumping is used as an example. An action state that an object reaches a highest point after leaving the ground may be referred to as an optimal completion point of jumping. When the object in an i^{th} frame of image is in an action state of leaving the ground and reaching the highest point, the action evaluation algorithm may output an action score of the image of 1 (that is, the highest score). When the object in the image does not leave the ground, or leaves the ground but does not reach the highest point, the action evaluation algorithm may output the action score of the image of 0.3, 0.5, or another score less than 1. Specifically, the action evaluation algorithm may determine, based on a distance from the highest point, action scores of different moments at which the object leaves the ground but does not reach the highest point. The optimal completion point of the action needs to be determined based on a running track of the photographed objected within a period of time. Therefore, the action evaluation algorithm may first determine an optimal completion point in a plurality of frames of images after receiving the plurality of frames of images within the period of time, may evaluate a motion state of each frame of image in the plurality of frames of images based on the optimal completion point, and may output an action score of each frame of image.

The clarity algorithm may be used to detect clarity of the image. Clarity of an image without jitters and noise is higher.

The algorithm module may determine an image evaluation of each frame of image by integrating results obtained using the algorithms. Specifically, the algorithm module may set, based on a type of the photographed object in the image, a method for calculating different image evaluations. For example, when the body detection algorithm recognizes that the image includes a person, the decision-making module may determine the image evaluation of the image based on all output results of the body detection algorithm, the action evaluation algorithm, the face attribute algorithm, the clarity algorithm, and photographing parameters reported by the camera lens and/or other sensors. When the body detection algorithm recognizes that the image does not include a person, for example, when the photographed object is a cat or a dog, the output result of the face attribute algorithm is null accordingly. In this case, the decision-making module may determine the image evaluation of the image only based on the output results of the body detection algorithm, the action evaluation algorithm, the clarity algorithm, and the photographing parameters reported by the camera lens and/or other sensors, thereby avoiding reducing the image evaluation of the image due to null values of the face detection algorithm and the face attribute algorithm. In addition, when no specific object is recognized, the output results of the body detection algorithm, the action evaluation algorithm, and the face attribute algorithm are all null values. In this case, the decision-making module may determine the image evaluation of the frame of image only based on clarity output by the clarity algorithm and data reported by the camera lens and/or other sensors.

Based on the hardware architecture and software architecture of the electronic device, the following separately describes, via the architecture, the photographing method provided in embodiments of this application.

**FIG. 8A to FIG. 8E** **are a schematic diagram of a method for manually capturing a highlight photo according to an embodiment of this application.** The method may be implemented based on interaction and cooperation among an application (for example, a camera application) layer, a framework (framework) layer, and a hardware abstract layer (hardware abstract layer, HAL) in the electronic device. The application layer mainly relates to a CameraUI module, a highlight capture module, and an image storage module in the camera application. The hardware abstract layer mainly relates to modules such as a preview stream module, a frame buffering module, a decision-making module, a data packing module, and an algorithm module. The framework layer mainly relates to a camera framework, and may include: a camera access interface for camera management and a camera device, as a connecting link between the preceding and the following. The application framework layer may interact with the camera application via an API, and may interact with a HAL via an HIDL. As shown in FIG. 8A to FIG. 8E, the method may include the following steps.

### Enabling a camera application

S11: A home screen of a system may detect an operation that a user enables a camera application. For example, the user taps a home screen icon of "Camera".

S12: In response to the operation that the user opens the camera application, the system may enable a CameraUI module and display a preview interface. The preview interface may include the preview box 123 and the "highlight capture" icon 127 as shown in FIG. 1B. The CameraUI module may be responsible for a human-computer interaction of the camera application, for example, controlling the preview interface, displaying an interface element in the preview interface, monitoring and responding to a user operation performed in the preview interface.

S13: The CameraUI module further sends a trigger message to a camera framework, where the trigger message may carry parameters such as a heavy algorithm, a first zoom range, and the like, to trigger a HAL to enable camera stream configuration.

S14: The camera framework further transmits a message of enabling stream configuration to the HAL, specifically, transmits the message to a preview stream module in the HAL.

Stream configuration herein may include initializing heavy algorithm, and configuring the first zoom range supported by the preview stream.

The heavy algorithm, that is, an algorithm supported by the preview stream, may include an artificial intelligence recognition algorithm, a high dynamic range (high dynamic range, HDR) algorithm, and the like. After receiving the preview stream, the CameraUI may display a function option corresponding to the algorithm in the preview box, for example, the HDR function option 126A and the AI function option 126B shown in FIG. 1B.

This meets various image processing requirements of the user. In this case, a "highlight capture" function is not enabled. The camera application only enables an ordinary photographing function, and a loaded algorithm is more complex than an algorithm loaded after the "highlight capture" function is enabled. Therefore, the algorithm in this case may be referred to as a "heavy algorithm", and the later algorithm may be referred to as a "light algorithm".

The zoom range supported by the preview stream may be adapted to the supported algorithms, to obtain optimal algorithm execution effect. For example, compared to ordinary photographing, "highlight capture" is intended to obtain a highlight frame by means of image evaluation, and the perception algorithm used by "highlight capture" needs to perform frame filtering based on more image details and higher image quality. Therefore, a higher zoom ratio with a significant loss of pixels may not be supported. This can also be learned from a comparison between the user interfaces shown in FIG. 1B and FIG. 1C. As shown in FIG. 1B, during ordinary photographing, the zoom range supported by the preview stream is from 0.5x to 10x. As shown in FIG. 1C, during "highlight capture", the zoom range supported by the preview stream is from 0.5x to 5x. Compared to 5x, 10x may result in more loss of image details, which is not suitable for the algorithm used in "highlight capture".

S15: After receiving a trigger message of enabling stream configuration, the HAL may send an instruction to the camera device, to enable the camera to start capturing an image.

S16: After enabling the camera, the HAL may receive an image stream from the camera, where the image stream may be referred to as an original image stream in this case.

S17: The HAL may process and compress the original image stream from the camera, to obtain a preview stream. In addition, the HAL may initialize the heavy algorithm, and configure the first zoom range supported by the preview stream.

S18: The HAL may return the preview stream to the camera framework. In this case, a zoom range configured for the preview stream is the first zoom range.

S19: After receiving the preview stream from the HAL, the camera framework may transmit the preview stream to the CameraUI in the camera application, to trigger the CameraUI to display a preview image in the preview box.

S20: CameraUI in the camera application displays the preview image in the preview interface using the preview stream. The preview image in the preview box may be continuously refreshed with the preview stream.

At this point, in response to the operation that the user enables the "Camera", the electronic device completes the display of the preview interface and the preview image in the preview interface.

S21: In response to the operation that the user enables the camera application, the CameraUI module may further enable the image storage module in the camera application. The image storage module may be used to store an image manually captured or automatically captured by the user to a file system or a specific database of the electronic device, for other applications such as a gallery to invoke the image.

The following describes what the electronic device performs after the "highlight capture" function is enabled, that is, how the application layer, the framework layer, the HAL, and the camera device in the electronic device work together to implement the "highlight capture" function.

### Enabling "highlight capture"

S22: The CameraUI module in the camera application may detect the operation that the user enables the "highlight capture" function. For example, the user taps the "highlight capture" icon in the preview interface.

S23: In response to the operation of enabling the "highlight capture" function, the CameraUI module may enable a "highlight capture" module of the camera application.

S24: The enabled "highlight capture" module may send a trigger message to the camera framework, to trigger the HAL to enable the camera stream configuration again.

S25: The camera framework further transmits a message of enabling stream configuration to the HAL, specifically, transmits the message to a preview stream module in the HAL.

Stream reconfiguration may include initializing light algorithm, and configuring a second zoom range supported by the preview stream. This is described in details in step S28.

S26: After receiving a trigger message of enabling stream reconfiguration, the HAL may send an instruction to the camera device, to enable the camera to start capturing an image.

S27: The HAL may continuously receive the image stream from the camera. In this case, the image stream may be referred to as the original image stream.

S28: The HAL may process and compress the original image stream from the camera, to obtain the preview stream. In addition, the HAL may initialize the light algorithm, and configure the second zoom range supported by the preview stream.

The light algorithm is mainly a perception algorithm in this specification, and may include a body detection algorithm, an action evaluation algorithm, a face detection algorithm, a face attribute algorithm, and a clarity algorithm. The body detection algorithm, the action evaluation algorithm, the face detection algorithm, and the face attribute algorithm may be used to acquire image content, and the clarity algorithm may be used to acquire clarity of the image. Indicators for evaluating image quality may include other parameters such as exposure in addition to clarity. The parameters may be directly acquired from the data reported by the camera lens and/or other sensors.

A maximum zoom ratio included in the second zoom range may be lower than a maximum zoom ratio included in the first zoom range, to enable a preview frame in a preview stream under "highlight capture" to have more image details, to perform image evaluation using a perception algorithm of "highlight capture".

For descriptions of initializing the algorithm and configuring a zoom range supported by the preview stream, refer to step S17. Details are not described herein again.

S29: The HAL may return the preview stream to the camera framework. In this case, based on the preview stream, the light algorithm is initialized, and the zoom range is configured as the second zoom range. To distinguish the preview stream returned to the camera framework in step S18, the preview stream returned in this step may be referred to as a new preview stream.

S30: After receiving the new preview stream from the HAL, the camera framework may transmit the new preview stream to the CameraUI in the camera application, to trigger the CameraUI to refresh the preview image in the preview box.

After receiving the preview stream, the CameraUI may understand that an algorithm corresponding to the preview stream is the light algorithm rather than the heavy algorithm, thereby disabling a function option corresponding to the heavy algorithm in the preview box, for example, disabling the HDR function option 126A and the AI function option 126B shown in FIG. 1B, as shown in FIG. 2C. The user may perceive that, after the "highlight capture" icon 122 in the preview interface is tapped, the HDR function option 126A and the AI function option 126B in the preview box become untouchable, for example, being grayed.

S31: The CameraUI in the camera application may also refresh the preview image with the new preview stream.

At this point, in response to the operation that the user enables "highlight capture", the electronic device completes related updates in the preview interface, and the updates may be perceived by the user.

In addition, in response to the operation that the user enables "highlight capture", the electronic device may further perform step S33 to step S39, to recognize the capturing intention of the user in advance, to support a subsequent quick capturing feedback, and support the provision of highlight photo that meets the capturing expectation of the user.

S32: After receiving, from the "highlight capture" module, a trigger message of enabling stream reconfiguration, the camera framework may further send an enabling message to the algorithm module in the HAL, to enable the algorithm module.

S33: The enabled algorithm module may obtain the preview stream from the preview stream module. The preview stream module may be coupled to a buffered region for storing the preview stream, and may read the preview stream buffered in the buffered region.

S34: The algorithm module may perform the perception algorithm, to perform image evaluation on the preview frame in the preview stream.

S35: After performing image evaluation, the algorithm module may feed frame information to the frame buffering module. The frame information may include a frame number, a time stamp, an evaluation result, and the like.

S36: The frame buffering module may receive the preview frame in the preview stream transmitted by the preview stream module.

S37: The frame buffering module may buffer the preview frames in the preview stream and frame information of preview frames fed back by the buffering module.

S38: The decision-making module may access the preview frame and the frame information buffered by the buffering module, to select an optimal frame every period of time, for example, select the optimal frame every 0.33 seconds. The optimal frame may be a preview frame that is obtained within 0.33 seconds using the perception algorithm and that has a highest image evaluation or a preview frame with an image evaluation higher than a specific reference value. 0.33 seconds is only an example, and selected from optimal recognition intervals of the user. 0.33 seconds may include a plurality of frames, such as 15 frames, which is determined based on a frame rate.

S39: The decision-making module may buffer, in a queued manner, an optimal frame that is selected in each period of time and that has a high evaluation result.

Buffering in a queued manner means that the optimal frames are stored one by one in a first-in first-out manner, and one or some optimal frames that may not be selected within 0.33 seconds are stored. That is, the image frame within 0.33 seconds may not obtain a high evaluation using the perception algorithm, and an evaluation value is lower than a specific threshold. In this case, no optimal frame is stored in a queue within 0.33 seconds. Alternatively, a preview frame with an optimal evaluation result in 0.33 seconds may be denoted as the optimal frame in 0.33 seconds. Therefore, an optimal frame may be evaluated in each 0.33 seconds.

Because the evaluation result of the perception algorithm is high, the optimal frames that are stored in the queue may be the image that the user expects to capture. Once detecting a capturing action of the user, the electronic device may quickly provide feedback to the user based on the optimal frame that is stored in the queue in advance, for example, updating the thumbnail in the preview interface. This resolves a problem that it is difficult to capture the highlight photo that meets the expectation due to a reaction time delay of a person.

Herein, "in advance" may mean to recognize based on a frame evaluation range of each preview frame after "highlight capture" is enabled, even if a manual capture action is not detected.

In this way, each optimal frame in the queue carries a time stamp, and the time stamps may be generated by the camera device. The decision-making module may understand a photographing time of each optimal frame in the queue via the time stamps. Therefore, during manual capture, the decision-making module may decide, based on a time of manual capture, which optimal frame is a highlight frame.

Step S33 to step S39 may be performed all the time when "highlight capture" is enabled. As time passes, a local optimal frame in the queue may be updated all the time, even if the manual capture action is not detected. In this way, some optimal frames that meet the expectation of the user may be recognized "in advance", to recognize the capturing intention of the user in advance, thereby supporting the subsequent quick decision-making for the manually-captured highlight frame. Optionally, step S38 and step S39 may also be performed after manual capture is triggered.

### Manual highlight capture

S40: The CameraUI module in the camera application detects a photographing operation of the user, for example, an operation that the user taps a "shutter" button in the preview interface. The user taps "shutter" to trigger photographing, which is referred to as manual capture.

S41: In response to manual capture, the CameraUI module may transmit a photographing request to the highlight capture module in the camera application. The request may carry a time stamp of manual capture.

Frame alignment may be performed based on the time of manual capture. For example, in duration of a preview frame in which manual capture is performed, a time indicated by a time stamp of the preview frame is the time of manual capture. This facilitates subsequent measurement of a time interval between manual capture and a buffered frame (buffered by the frame buffering module).

S42: The highlight capture module may send a photographing request to the camera framework. The request also carries the time stamps of manual capture.

S43: The camera framework may send the photographing request to the decision-making module in the HAL, to trigger manual capture. The request may carry the time stamps of manual capture.

S44: After receiving the photographing request, the decision-making module may obtain a thumbnail A of the preview frame corresponding to the time stamps based on the time stamps in the request, that is, a thumbnail of manual capture.

The preview frame corresponding to the time stamps is the preview frame displayed in the preview box when the user enables the "shutter".

S44: The decision-making module may return the thumbnail A to the camera framework.

S45: The camera framework sends the thumbnail A to the CameraUI module.

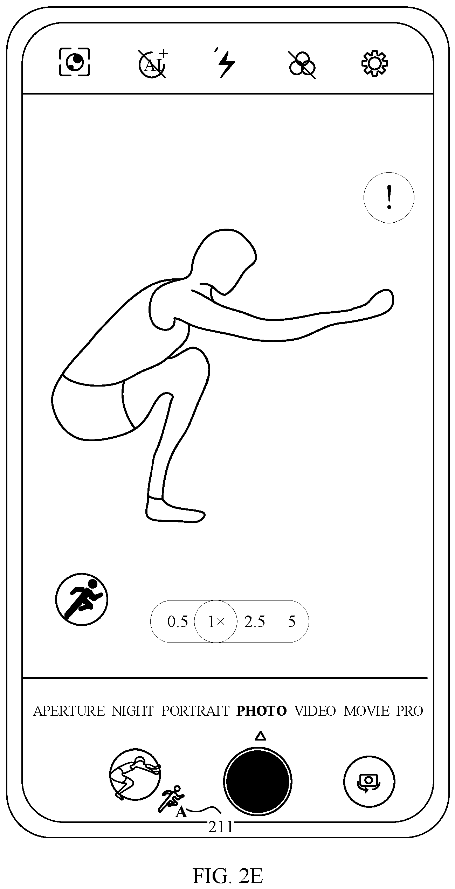

S46 and S47: After receiving the thumbnail A, the CameraUI module may display the thumbnail A. For example, in the preview interface shown in FIG. 2E, a thumbnail displayed on the playback control 124 is updated into the thumbnail A.

At this point, the electronic device provides quick feedback about manual capture of the user by using a first highlight frame buffered before manual capture, that is, refreshing a new thumbnail, and displaying the thumbnail A.

In addition, the electronic device further performs step S50 to step S57, to decide a highlight frame for generating a full-size image, to enable the user to obtain the highlight photo that meets an expectation.

S50: After receiving the photographing request, the decision-making module may decide the manually-captured highlight frame from optimal frames within a period of time before manual capture and optimal frames within a period of time after manual capture. The manually-captured highlight frame is finally stored as a highlight photo provided to the user.

For example, the decision-making module may compare optimal frames within 1 second before manual capture and optimal frames within 0.5 seconds after manual capture, specifically, may select an optimal frame A from the optimal frames within 1 second before manual capture, select an optimal frame B from the optimal frames within 0.5 seconds after the manual capture, compare the optimal frame A to the optimal frame B, and select a better one from the optimal frame A and the optimal frame B as the manually-captured highlight frame. The optimal frame A may be an optimal frame with a highest image evaluation or an optimal frame with an image evaluation higher than a specific reference value within 1 second before manual capture. The optimal frame B may be an optimal frame with a highest image evaluation or an optimal frame with an image evaluation higher than a specific reference value within 0.5 seconds after manual capture.

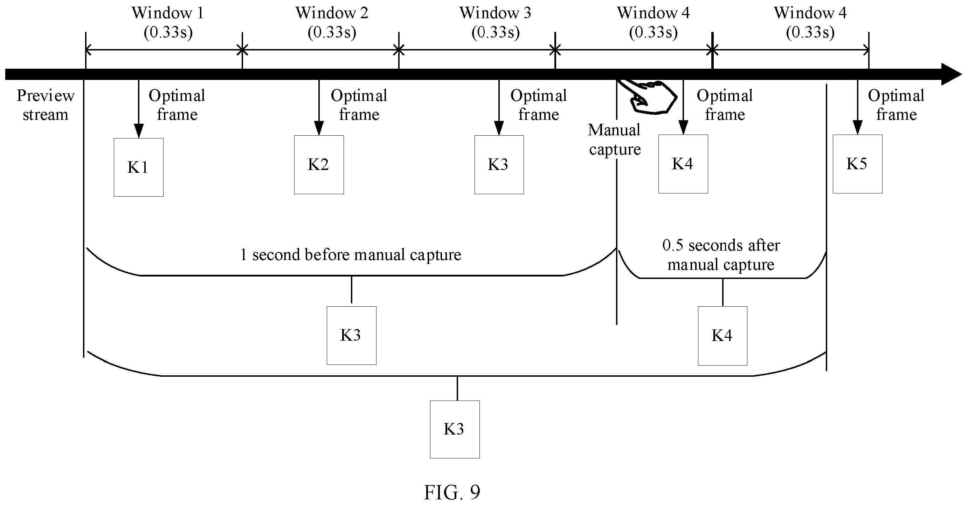

Assuming that as shown in FIG. 9, there are optimal frames K1, K2, and K3 within 1 second before manual capture and an optimal frame K4 within 0.5 seconds after manual capture which are obtained by evaluating the optimal frame every 0.33 seconds after highlight capture is enabled, and an image evaluation of K3 among K1, K2, and K3 is highest and higher than an image evaluation of K4, K4 is decided as the highlight frame within 0.5 seconds after manual capture, and K3 is decided, from the optimal frames K1, K2, and K3, as the highlight frame within 1 second before manual capture, and then by comparing K3 to K4, K3 is finally decided as the manually-captured highlight frame, that is, the manually-captured highlight frame.

The manually-captured highlight frame can be decided from optimal frames before and after the time of manual capture, a highlight photo that more meets an expectation of the user can be provided for manual capture of the user, and initiative of manual capture of the user is reflected.

In this specification, 0.5 seconds and 1 second are just examples, and in an actual application, values may be set as required. As mentioned above, the decision-making module selects the optimal frame every 0.33 seconds and stores the optimal frame in a queued manner. Therefore, at most three optimal frames are stored in the queue within 1 second before manual capture. The period of time after manual capture may be set to be shorter than the period of time before manual capture, to decide the manually-captured highlight frame as early as possible after manual capture.

S51: After deciding the manually-captured highlight frame, the decision-making module may send the manually-captured highlight frame to a data packing module.

S52: The data packing module packs the manually-captured highlight frame, to generate a full-size image, that is, to obtain the manually-captured highlight photo.

A thumbnail B corresponding to the full-size image may be added during packing. That is, the full-size image of manual capture includes the thumbnail B. A packet obtained after the highlight frame is packed may be an exchangeable image file (exchangeable image file, Exif). The Exif includes, but is not limited to the following information: the highlight frame, the photographing time of the highlight frame, the highlight parameter, and the like.

Optionally, like the frame buffering module, the data packing module may further be coupled to a buffered region in which the optimal frame is stored. In step S49, the decision-making module may further send only a frame number of the manually-captured highlight frame to the data packing module, and the data packing module may obtain, based on the frame number, the manually-captured highlight frame from the buffered region in which the optimal frame is stored, and may pack the manually-captured highlight frame. This can save computer resources.

S53: After generating the full-size image, the data packing module may return the full-size image to the camera framework. The full-size image includes the thumbnail B.

S54: The camera framework may return the full-size image to the image storage module in the camera application. The full-size image includes the thumbnail B.

S55: After receiving the full-size image, the image storage module stores the full-size image, for example, stores the full-size image in a file system or a specific database.

Subsequently, after the user exits the camera application and then enables the camera application again, the user may see that the thumbnail image in the preview interface is updated to the thumbnail image B.

S56: The electronic device exits the camera application and exits displaying of the preview interface. Then, the electronic device enables the camera application again and enables the preview interface again.

S57: The camera application may obtain the thumbnail B from the file system, and may refresh and display the thumbnail B via the CameraUI module.

To be specific, the camera application updates the thumbnail once again after the manually-captured highlight frame is decided. This is equivalent to updating the thumbnail in the preview interface in two steps: The first step is to immediately feed back the thumbnail A based on the preview frame of manual capture; and the second step is to comprehensively decide the highlight frame from the highlight frames obtained within the period of time before manual capture and within the period of time after manual capture, and then feed back the thumbnail B. In this way, for manual capture, timely feedback (the thumbnail A) can be provided in the preview interface, and feedback (the thumbnail B) can be further optimized.

Not limited to exiting the camera and enabling the camera again, the user may further enable the gallery by tapping the home screen icon of the gallery, and view the thumbnail B of the manually-captured highlight frame in the gallery.

At this point, for manual capture, the electronic device completes interface feedback and obtaining of the highlight photo.

Thereafter, the user may enable the "Gallery" to view the highlight photo. For example, the user may tap the thumbnail in the preview interface enabled again, to enter the gallery for viewing the manually-captured highlight photo. Certainly, the user may also enter the gallery from the home screen of the system. The gallery may load, from the file system or the specific database, full-size images that are stored, to show the manually-captured highlight photo for the user.

**FIG. 10A to FIG. 10E** **are a schematic diagram of a method for automatically capturing a highlight photo according to an embodiment of this application.** The method may be implemented based on interaction and cooperation among an application (for example, a camera application) layer, a framework (framework) layer, and a hardware abstract layer (hardware abstract layer, HAL) in the electronic device. The application layer mainly relates to a CameraUI module, a highlight capture module, an auto capture module, and an automatic image storage module in the camera application. The hardware abstract layer mainly relates to modules such as a preview stream module, a frame buffering module, a decision-making module, a data packing module, and an algorithm module. The framework layer mainly relates to the camera framework, and may include: a camera access interface for camera management and a camera device, as a connecting link between the preceding and the following. The framework layer may interact with the camera application via an application program interface (application program interface, API), and may interact with a HAL. As shown in FIG. 10A to FIG. 10E, the method may include the following steps.

### Enabling a camera application

For step S61 to step S71, refer to step S11 to step S21 in the method embodiment in FIG. 8A to FIG. 8E above. To be specific, the implementation of the automatically-captured highlight photo and the manually-captured highlight photo in this part of enabling the camera application may be reused.

### Enabling "highlight capture"

For step S72 to step S89, refer to step S22 to step S39 in the method embodiment in FIG. 8A to FIG. 8E above. To be specific, the implementation of the automatically-captured highlight photo and the manually-captured highlight photo in this part of enabling "highlight capture" may be reused. "Highlight capture" needs to be enabled first in the two photographing methods.

### Enabling auto capture

S90: The CameraUI module in the camera application may detect an operation that the user enables "auto capture". For example, the user first taps the settings option 126E in the preview interface to open a camera settings page, taps the "highlight capture" settings option to enter a "highlight capture" settings page, and then taps the auto capture on/off button 141 to enable the "auto capture" function.

S91: In response to the operation of enabling "auto capture", the CameraUI module may enable the auto capture module in the camera application, and transmit the time of enabling auto capture.

In this way, frame alignment may be performed based on the time of enabling auto capture. For example, in a duration of a preview frame in which auto capture is performed (for example, the auto capture on/off button 141 is tapped), a time indicated by a time stamp of the preview frame is the time of enabling auto capture.

S92: The enabled auto capture module sends a request of enabling auto capture to the camera framework. The request may carry the time of enabling auto capture.

S93: The camera framework may send an algorithm execution request to the algorithm module in the HAL, to trigger the algorithm module to start searching for the automatically-captured highlight frame. The request may further carry the time of enabling auto capture.

S94, upon receipt of the request, the algorithm module may search for the automatically-captured highlight frame based on the time of enabling auto capture.

Specifically, the algorithm module may search for the local optimal frame every time period (or consecutive plurality frames of images) backward from the time of enabling auto capture. The local optimal frame selected in a period of time (for example, 0.33 seconds) means a preview frame with a highest image evaluation or a preview frame with an image evaluation higher than a specific reference value obtained using a perception algorithm within the period of time or the consecutive plurality of frames. When a local optimal frame is obtained from a preceding consecutive plurality of frames, it is determined whether there is a next local optimal frame in a following consecutive plurality of preview frames; if it is detected that there is the next local optimal frame in the following consecutive plurality of preview frames, a preceding local optimal frame is replaced by a following local optimal frame, and so on; or if it is detected that there is no next local optimal frame in the following consecutive plurality of preview frames, a preceding local optimal frame is donated as the automatically-captured frame.

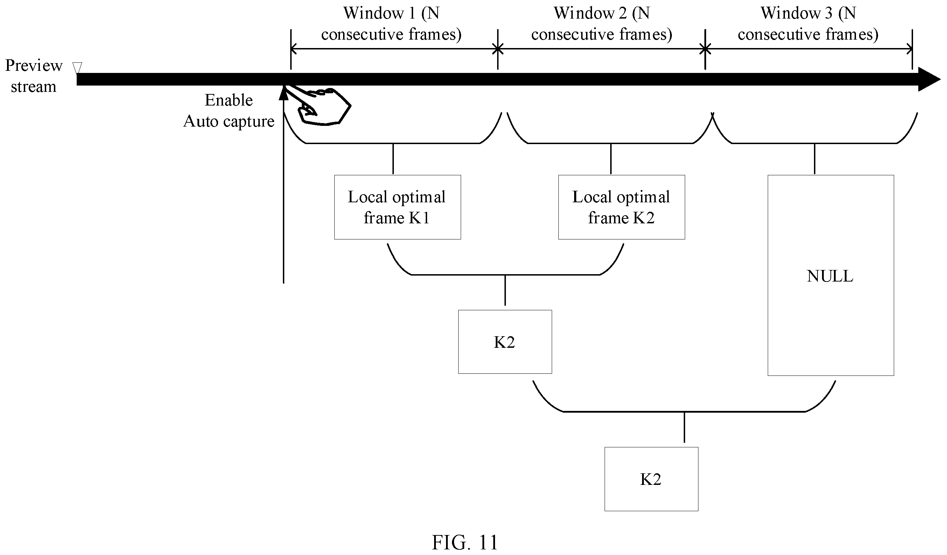

For example, as shown in FIG. 11, assuming that backward from the time of enabling auto capture, a local optimal frame K1 is decided in a window 1 (N consecutive frames) and a local optimal frame K2 is decided in a window 2 (N consecutive frames), the local optimal frame K1 is replaced by the local optimal frame K2, and subsequently, no local optimal frame is decided in a window 3 (N consecutive frames), which is null (NULL), searching backward is stopped, and the local optimal frame K2 is donated as the automatically-captured highlight frame.

Optionally, a time limit may be set, to constrain a time at which searching for the automatically-captured highlight frame ends. When there are consecutive local optimal frames after auto capture is enabled, an algorithm module may use the time limit as a constraint, and denote the last local optimal frame before the time limit as the automatically-captured highlight frame instead of searching all the time. In this way, the highlight photo can be fed back as soon as possible. Different time limits may be set for different photographing scenarios. For example, a time limit for a long jump scenario is 3 seconds, and a time limit for a smile scenario is 1 second. The algorithm module may determine the photographing scenario by performing image recognition.

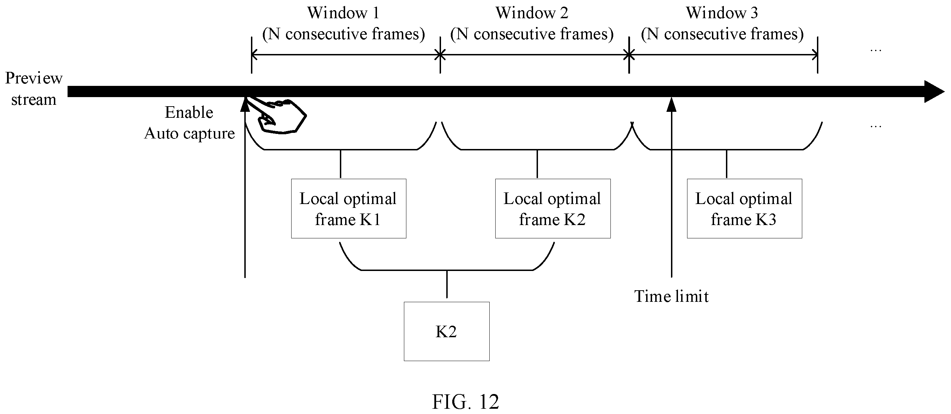

For example, as shown in FIG. 12, assuming backward from the time of enabling auto capture, a local optimal frame K1 is decided in a window 1 (N consecutive frames) and a local optimal frame K2 is decided in a window 2 (N consecutive frames), and the local optimal frame K2 is the last local optimal frame before the time limit, the local optimal frame K2 is donated as the automatically-captured highlight frame, even if the local optimal frame may be decided in subsequent windows, for example, the local optimal frame K3 may be decided in the window 3 (N consecutive frames).

In different photographing scenarios, the perception algorithm used in the algorithm module may be different, to better recognize a capturing intention of the user in different scenarios.

S95: After the automatically-captured highlight frame is found, the algorithm module may trigger the decision-making module to generate an image, and provide feedback to the decision-making module with frame information of the automatically-captured highlight frame, for example, the time stamp.

Optionally, before the decision-making module is triggered to generate the image, the HAL may further confirm whether the photographing scenario is not changed in a recent period of time (for example, within a first 10 seconds). If the scenario is not changed and the decision-making module is triggered to generate the image based on a preceding automatically-captured highlight frame in that scenario, the decision-making module is not repeatedly triggered to generate the image, to avoid generating a plurality of same or similar automatically-captured highlight photos. Because highlight frames found by the algorithm module in a same photographing scenario are approximately the same.

S96: The decision-making module may request to obtain the automatically-captured highlight frame from the frame buffering frame module based on the time stamp of the automatically-captured highlight frame, to trigger the data packing module to pack the automatically-captured highlight frame.

S97: Before the data packing module is triggered to pack the automatically-captured highlight frame, the decision-making module may further confirm that this auto capture is not intercepted by manual capture. For example, if no manual capture is performed within 1 second after the highlight frame is automatically captured (a time indicated by the time stamp), it is determined that automatic capture is not intercepted by manual capture, and the automatically-captured highlight frame may be packed, and stored as the highlight photo.

S98: The decision-making module may send the automatically-captured highlight frame to the data packing module.

S99: The data packing module packs the automatically-captured highlight frame, to generate a full-size image, that is, to obtain the automatically-captured highlight photo.

A packet obtained after the highlight frame is packed may be an exchangeable image file (exchangeable image file, Exif). The Exif includes, but is not limited to the following information: the highlight frame, the photographing time of the highlight frame, the highlight parameter, and the like. Information added during packing may be read in attribute information of the highlight photo.

Optionally, like the frame buffering module, the data packing module may further be coupled to a buffered region in which the preview frame is stored. In step S45, the decision-making module may further send only a frame number or a time stamp of the automatically-captured highlight frame to the data packing module, and the data packing module may read, based on the frame number or the time stamp, the automatically-captured highlight frame from the buffered region, and may pack the automatically-captured highlight frame. In this way, register resources used for invoking an interface, transmitting a parameter, and the like.

S100: After the full-size image is generated, the data packing module may return the full-size image to the camera framework.

S101: The camera framework may return the full-size image to the automatic image storage module in the camera application.

S102: After receiving the full-size image, the automatic image storage module may extract a thumbnail from the full-size image.

S103: The image storage module may send the thumbnail to the CameraUI module, to trigger the CameraUI module to refresh the thumbnail in the preview interface, and update the thumbnail to the thumbnail extracted in step S49.

S104: After receiving the full-size image, the image storage module may further store the full-size image, for example, stores the full-size image in a file system or a specific database.

At this point, for auto capture, the electronic device completes interface feedback and obtaining of the automatically-captured highlight photo.

Thereafter, the user may enable the "Gallery" to view the highlight photo. For example, the user may tap the thumbnail in the preview interface to enter the gallery for viewing the highlight photo. Certainly, the user may also enter the gallery from the home screen of the system. The gallery may load, from the file system or the specific database, full-size images that are stored, to show the automatically-captured highlight photo for the user.

When "auto capture" is enabled, the user is allowed to perform manual capture. This may result in the following: In a process of generating the automatically-captured highlight photo, manual capture is triggered.

In this case, generation of the automatically-captured highlight photo is slightly earlier than generation of the manually-captured highlight photo, for example, 50 milliseconds earlier. However, generation of the manually-captured thumbnail is earlier than generation of the automatically-captured highlight photo, because the manually-captured thumbnail may be generated without performing data packing processing, and may be directly extracted from the decided manually-captured highlight frame, while the highlight photo is generated by performing time-consuming data packing processing. A difference from the manually-captured thumbnail lies in that the automatically-captured thumbnail is extracted from the automatically-captured highlight photo. This means that the automatically-captured thumbnail may be generated only after data packing processing is performed. Therefore, generation of the manually-captured thumbnail is earlier than generation of the automatically-captured thumbnail.

As described above, the automatically-captured thumbnail is generated only after data packing processing is performed. This is equivalent that a display opportunity is delayed by data packing. To be specific, the manually-captured thumbnail that does not need to wait for data packing processing takes the opportunity. This may result in a timing conflict problem that auto capture is earlier than manual capture but manually-captured thumbnail is displayed earlier. In terms of the UI, this may result in confusion that the user views the manually-captured thumbnail refreshed first and then views the automatically-captured thumbnail refreshed in the preview interface, but views the automatically-captured highlight photo before the manually-captured highlight photo in the gallery.

**The following describes in details how to deal with the conflict with reference to a photographing method shown in** **FIG. 13A to FIG. 13C****.** Deception may be starting from enabling "auto capture" is detected in FIG. 13A to FIG. 13C. For previous enabling the camera application and enabling highlight capture, refer to related content in embodiments in FIG. 8A to FIG. 8E and FIG. 10A to FIG. 10E above.

### Conflict between auto capture and manual capture

S111: The CameraUI module in the camera application may detect the operation that the user enables the "auto capture".

S112: In response to the operation of enabling "auto capture", the CameraUI module may enable the auto capture module in the camera application, and transmit the time of enabling auto capture.

S113: The enabled auto capture module sends a request of enabling auto capture to the camera framework. The request may carry the time of enabling auto capture.

S114: The camera framework may send an algorithm execution request to the algorithm module in the HAL, to trigger the algorithm module to start searching for the automatically-captured highlight frame. The request may further carry the time of enabling auto capture.

S115: After receiving the request, the algorithm module may search for the automatically-captured highlight frame based on the time of enabling auto capture.

S116: After the automatically-captured highlight frame is found, the algorithm module may trigger the decision-making module to generate an image, and provide feedback to the decision-making module with frame information of the automatically-captured highlight frame, for example, the time stamp.

S117: The decision-making module may request to obtain the automatically-captured highlight frame from the frame buffering frame module based on the time stamp of the automatically-captured highlight frame, to trigger the data packing module to pack the automatically-captured highlight frame.

S118: The decision-making module may send the automatically-captured highlight frame to the data packing module.

S119: The data packing module packs the automatically-captured highlight frame, to generate a full-size image, that is, the automatically-captured highlight photo.

As described above, data packing processing is time-consuming.

During the generation process of the automatically-captured highlight photo described in step S111 to step S119 above, manual capture is triggered, as shown in step S120 to step S130:

S120: The CameraUI module in the camera application detects a photographing operation of the user, for example, an operation that the user presses a "shutter" button in the preview interface. The user taps "shutter" to trigger photographing, which is referred to as manual capture.

S121: In response to manual capture, the CameraUI module may transmit a photographing request to the highlight capture module in the camera application. The request may carry a time stamp of manual capture.

S122: The highlight capture module may send a photographing request to the camera framework.

S123: The camera framework may send the photographing request to the decision-making module in the HAL, to trigger manual capture.

S124: The decision-making module may decide the manually-capture highlight frame based on the time of manual capture.

For how to decide the manually-captured highlight frame, refer to the foregoing content, and details are not described herein.

### Quickly responding to auto capture in the interface

S125: Subsequently, the decision-making module may request to obtain the manually-captured highlight frame from the frame buffering frame module based on the time stamp of the manually-captured highlight frame.

S126: The decision-making module may send the manually-captured highlight frame to the data packing module, to trigger the data packing module to generate the manually-captured thumbnail, and pack the manually-captured highlight frame.

Thereafter, the data packing module may quickly return the manually-captured thumbnail to the camera application, as shown in S128 and S129. In addition, as shown in S127, the data packing module packs the manually-captured highlight frame, to generate a full-size image, that is, to obtain the manually-captured highlight photo. As described above, data packing processing is time-consuming.

S130: The camera application (specifically, may be the cameraUI module) refreshes and displays the manually-captured thumbnail.

At this point, the electronic device first quickly feed, on the preview interface, back manual capture of the user, even if manual capture is performed later.

Thereafter, after packing processing is performed on the highlight frame (packing performed on auto capture is completed earlier), the conflict problem may be resolved by the following processing.

### Processing for conflict

S131: After the automatically-captured highlight photo is generated after packing processing, the data packing module may return the automatically-captured full-size image to the camera framework, that is, to return the automatically-captured highlight photo.

S132: The camera framework returns the automatically-captured full-size image to the automatic image storage module.

S133: The automatic image storage module may store the automatically-captured highlight photo to the file system.

S134: The automatic image storage module may confirm whether the time stamp of the automatically-captured highlight photo (the same as the time stamp of the manually-captured highlight frame) is earlier than the time stamp of a most recent manually-captured thumbnail. If the time stamp of the automatically-captured highlight photo is earlier than the time stamp of a most recent manually-captured thumbnail, the automatically-captured thumbnail is not refreshed and displayed, thereby avoiding the conflict problem.

As shown in an example in FIG. 13A to FIG. 13C, the time stamp of the automatically-captured highlight frame is slightly earlier than the time stamp of the manually-captured highlight frame, for example, the time stamp of the automatically-captured highlight frame is "2023/2/21 20:29:44:450", and the time stamp of the manually-captured highlight frame is "2023/2/21 20:29:44:500", that is, 50 milliseconds earlier. However, a time at which the camera application receives the returned manually-captured thumbnail is "2023/2/21 20:29:45:000", and a time at which the camera application receives the returned automatically-captured full-size image is "2023/2/21 20:29:45:100". That is, the camera application receives the automatically-captured full-size image after refreshing and displaying the manually-captured thumbnail. If the automatically-captured thumbnail is extracted from the automatically-captured full-size image first and then refreshed and displayed, there may be confusion that the user views the manually-captured thumbnail refreshed first and then views the automatically-captured thumbnail refreshed in the preview interface, but views the automatically-captured highlight photo before the manually-captured highlight photo in the gallery.

For implementations of displaying the manually-captured the thumbnail in two steps, the most recent manually-captured thumbnail may be the first manually-captured thumbnail. Certainly, the most recent manual thumbnail may also be the second manually-captured thumbnail. If the data packing process of the automatically-captured full-size image is time-consuming, returning of the second manually-captured thumbnail is earlier than returning of the automatically-captured full-size image.

### Completing the following after packing of manual capture

S135: After packing is performed to generate the manually-captured highlight photo, the data packing module may return the manually-captured full-size image to the camera framework, that is, return the manually-captured highlight photo.

S136: The camera framework returns the manually-captured full-size image to the automatic image storage module.

S137: The automatic image storage module may store the manually-captured highlight photo in the file system.

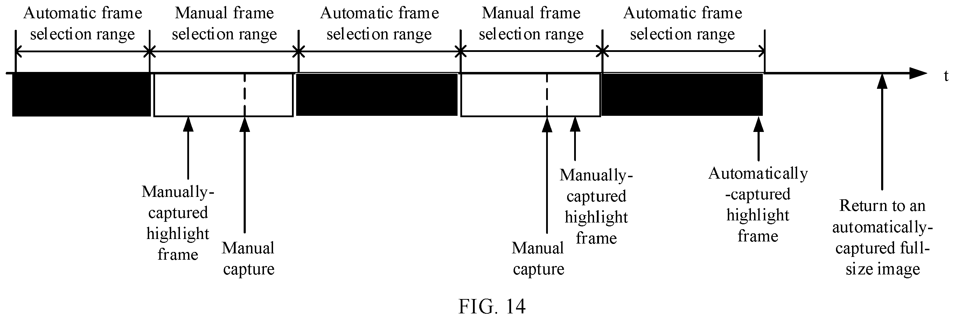

In addition, FIG. 14 is a schematic diagram of a frame selection strategy according to an embodiment of this application. As shown in FIG. 14, after "auto capture" is enabled, a frame selection range of auto capture may not always be continuous, but discrete in segments. To be specific, an algorithm module may decide whether there is an automatically-captured highlight frame within the "frame selection range of auto capture" until that an automatically-captured highlight frame is found. In addition, a frame selection range of manual capture may be a complement of the frame selection range of auto capture. Therefore, it may not hold on to decide the manually-captured highlight frame within a fixed period of time (for example, 1 second) before a manual capture action and a fixed period of time (for example, 0.5 seconds) after the manual capture action. In this way, the automatically-captured highlight frame is not the same as the manually-captured highlight frame, to prevent a same highlight photo from being stored repeatedly. Certainly, in an actual application, the frame selection range of manual capture and the frame selection range of auto capture may be overlapped. This is not limited in this embodiment of this application.

The term "user interface (user interface, UI)" in this specification, claims, and accompanying drawings of this application is a medium interface for interaction and information exchange between an application or an operating system and a user. The user interface implements conversion between an internal form of information and a form acceptable to the user. A user interface of an application program is source code written in a specific computer language such as Java or extensible markup language (extensible markup language, XML). The interface source code is parsed and rendered on a terminal device, and finally presented as user-recognizable content, for example, a control such as a picture, a text, or a button. A control (control), also referred to as a widget (widget), is a basic element of the user interface. Typical controls include a toolbar (toolbar), a menu bar (menu bar), a text box (text box), a button (button), a scrollbar (scrollbar), a picture, and a text. Attributes and content of controls on a screen are defined by tags or nodes. For example, in XML, controls included in a screen are defined by nodes such as <Textview>, <ImgView>, and <VideoView>. A node is corresponding to a control or attribute in the interface. The node is presented as content visible to a user after being parsed and rendered. In addition, interfaces of many applications, such as a hybrid application (hybrid application) interface, generally include a web page. A web page, also referred to as a page, may be understood as a special control embedded in an application interface. The web page is source code written in specific computer languages such as a hyper text markup language (hyper text markup language, HTML), a cascading style sheet (cascading style sheet, CSS), and a JavaScript (JavaScript, JS). The source code of the web page may be loaded and displayed by a browser or a web page display component with similar functions to the browser as content that can be recognized by the user. Specific content included in the web page is also defined by tags or nodes in the source code of the web page. For example, HTML defines elements and attributes of the web page through <p>, <img>, <video>, and <canvas>.

A common representation form of the user interface is a graphic user interface (graphic user interface, GUI), which is a graphically displayed user interface related to a computer operation. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

It should be understood that the steps of the foregoing method embodiment provided in this application may be implemented by using a hardware integrated logic circuit in the processor or implemented by using instructions in a software form. The steps of the method disclosed with reference to embodiments of this application may be directly implemented by a hardware processor, or may be implemented by a combination of hardware and software modules in a processor.

This application further provides an electronic device, and the electronic device may include a memory and a processor. The memory may be configured to store a computer program, and the processor may be configured to invoke the computer program in the memory to cause the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor.

The chip system may be formed by chips, or may include chips and other discrete components.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in this embodiment of this application. For example, the memory may be a non-transitory memory such as a read-only memory ROM, and the memory and the processor may be integrated on a same chip, or may be arranged on different chips respectively. A type of the memory and an arrangement manner of the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product, and the computer program product includes a computer program (which may also be referred to as code or an instruction). When the computer program is run, a computer is caused to perform the method performed by the electronic device in any one of the foregoing embodiments.

This application further provides a computer-readable storage medium. The computer-readable storage medium stores a computer program (also referred to as code or an instruction). When the computer program is run, a computer is caused to perform the method performed by the electronic device in any one of the foregoing embodiments.

Implementations of this application may be randomly combined, to achieve different technical effects.

All or some of the foregoing embodiments may be implemented by software, hardware, firmware, or any combination thereof. In a case that software is used for implementation, implementation may be entirely or partially carried out in the form of a computer program product. A computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, that includes an integration of one or more usable media. The available medium may be a magnetic medium (for example, a floppy disk, a hard disk, or a magnetic tape), an optical medium (for example, a DVD), a semiconductor medium (for example, a solid-state drive (Solid State Disk)), or the like.

Those of ordinary skill in the art can understand that all or some flows of the method in the above embodiments may be implemented by using a computer program instructing related hardware. This program may be stored in a computer-readable storage medium. When this program is performed, flows of all method embodiments mentioned above may be included. The storage medium includes: any medium that can store program code, such as an ROM, a random access memory RAM, a magnetic disk, and an optical disk.

## Claims

1. A photographing method, comprising:
displaying, by an electronic device, a preview interface, wherein the preview interface displays an image captured by a camera lens of the electronic device and a first thumbnail;
enabling, by the electronic device, an automatic capture function, to obtain a first image frame, wherein the first image frame corresponds to a first time stamp;
detecting, by the electronic device, that a shutter button is pressed when displaying a second image frame, wherein the second image frame corresponds to a third time stamp; and
when the first time stamp is earlier than or equal to a second time stamp, displaying, by the electronic device, a thumbnail of the second image frame, and skipping displaying a thumbnail of the first image frame in the photographing preview interface, wherein the first time stamp is earlier than the third time stamp and the second time stamp is earlier than a fourth time stamp, and wherein the generation time of the thumbnail of the second image frame corresponds to the second time stamp, and the generation time of the thumbnail of the first image frame corresponds to the fourth time stamp;
when the first time stamp is later than the second time stamp, displaying, by the electronic device, the thumbnail of the second image frame first, and then displaying the thumbnail of the first image frame in the photographing preview interface;
wherein the electronic device comprises: a camera application, a camera framework, and a Hardware Abstraction Layer, HAL; and in the case that the first time stamp is earlier than the second time stamp the skipping displaying a thumbnail of the first image frame comprises: sending, by a decision-making module in the HAL, the first image frame to a data packing module in the HAL; packing, by the data packing module, the first image frame; returning, by the data packing module, a packed first image frame to the camera framework, wherein the packed first image frame comprises the thumbnail of the first image frame; returning, by the camera framework, the packed first image frame to an automatic image storage module in the camera application; extracting, by the automatic image storage module, the thumbnail of the first image frame from the packed first image frame; and determining, by the automatic image storage module, whether the time stamp of the first image frame is earlier than the time stamp of the thumbnail of the second image frame, and if the time stamp of the first image frame is earlier than the time stamp of the thumbnail of the second image frame, determining not to refresh and display the thumbnail of the first image frame;
wherein the displaying, by the electronic device, a thumbnail of the second image frame comprises: returning, by a decision-making module in the HAL, the thumbnail of the second image frame to the camera framework; returning, by the camera framework, the thumbnail of the second image frame to a UI module in the camera application; and displaying, by the UI module, the thumbnail of the second image frame.

2. The method according to claim 1, further comprising:
storing, by the electronic device, the first image frame in a gallery; and
storing, by the electronic device, a third image frame in the gallery, wherein a time stamp of the third image frame is later than the first time stamp of the first image frame;
wherein the third image frame is obtained based on an image frame in a first time range, an image frame captured by the camera lens in the first time range comprises the second image frame; and the third image frame is different from the second image frame, and
wherein the first time range comprises a first duration before manual capture and/or a second duration after manual capture.

3. The method according to claim 2, further comprising:
storing, by the electronic device, the thumbnail of the first image frame in the gallery; and
storing, by the electronic device, a thumbnail of the third image frame in the gallery, wherein a time stamp of the thumbnail of the third image frame is later than the first time stamp of the thumbnail of the first image frame.

4. The method according to claim 2 or 3, further comprising:
exiting, by the electronic device, displaying of the photographing preview interface; and
displaying, by the electronic device, the photographing preview interface again, and displaying a thumbnail of the third image frame in the photographing preview interface.

5. The method according to claim 2 or 3, wherein further comprising:
detecting, by the electronic device in the photographing preview interface, an operation of tapping on the thumbnail of the second image frame;
displaying, by the electronic device, a full-size image display interface of a gallery application, wherein the full-size image display interface displays the third image frame;
detecting, by the electronic device in the full-size image display interface, an operation of viewing a photo forward; and
refreshing and displaying, by the electronic device, the first image frame in the full-size image display interface.

6. The method according to any one of claims 1 to 5, wherein the first image frame is obtained from a preview frame obtained after the automatic capture function is enabled.

7. The method according to claim 6, wherein the first image frame is obtained from a preview frame obtained after the automatic capture function is enabled comprises:
obtaining, by an algorithm module in the HAL, a preview frame in a preview stream from a preview stream module in the HAL;
deciding, by the algorithm module in the HAL, a local optimal frame from every consecutive plurality of frames backward from a time at which automatic capture is enabled, wherein the local optimal frame is a preview frame with a highest image evaluation or a preview frame with an image evaluation higher than a first reference value in the consecutive plurality of frames; and
after finding a local optimal frame from a preceding consecutive plurality of frames, determining, by the algorithm module, whether there is a next local optimal frame in a following consecutive plurality of preview frames; if there is the next local optimal frame in the following consecutive plurality of preview frames, replacing a preceding local optimal frame by a following local optimal frame; or if there is no next local optimal frame in the following consecutive plurality of preview frames, denoting a preceding local optimal frame as the first image frame.

8. The method according to any one of claims 2 to 4, wherein the electronic device comprises: a camera application, a camera framework, and a HAL; and that the third image frame is obtained based on an image frame in a first time range comprises:
obtaining, by a decision-making module in the HAL, a preview frame in a preview stream and frame information of the preview frame from a frame buffering module in the HAL, wherein the frame information comprises a time stamp, and an image evaluation;
selecting, by the decision-making module, a local optimal frame once every period of time, and buffering the local optimal frame in a queued manner, wherein the local optimal frame is a preview frame with a highest image evaluation or a preview frame with an image evaluation higher than a first reference value within the period of time; and
selecting, by the decision-making module, the third image frame from a local optimal frame that is buffered in a queued manner and that is in the first time range, wherein the third image frame is a preview frame with a highest image evaluation or a preview frame with an image evaluation higher than a second reference value in the first time range.

9. The method according to claim 8, further comprising:
obtaining, by an algorithm module in the HAL, a preview frame in preview from a preview stream module in the HAL, and performing image evaluation on the preview frame, to obtain an image evaluation;
returning, by the algorithm module, the image evaluation of the preview frame to the frame buffering module in the HAL; and
receiving, by the frame buffering module, the preview frame in the preview stream transmitted by the preview stream module, and buffering the preview frame and the frame information of the preview frame.

10. The method according to any one of claims 2 to 5, wherein the storing, by the electronic device, a third image frame in the gallery comprises:
sending, by a decision-making module, the third image frame to a data packing module in a HAL;
packing, by the data packing module, a third image frame, and returning the packed third image frame to a camera framework, wherein the packed third image frame comprises the thumbnail of the third image frame;
returning, by the camera framework, the packed third image frame to an image storage module in a camera application; and
storing, by the image storage module, the packed third image frame.

11. An electronic device (100), comprising one or more processors (110) and one or more memories (126), wherein the one or more memories are coupled to the one or more processors, and the one or more memories are configured to store computer program code, the computer program code comprises computer instructions, and when the one or more processors execute the computer instructions, the method according to any one of claims 1 to 10 is performed.

12. A computer-readable storage medium, comprising instructions, wherein when an electronic device runs the instructions, the method according to any one of claims 1 to 10 is performed.

## Patentansprüche

1. Ein Fotografierverfahren, umfassend:
Anzeigen einer Vorschau-Schnittstelle durch eine elektronische Vorrichtung, wobei die Vorschau-Schnittstelle ein von einem Kameraobjektiv der elektronischen Vorrichtung erfasstes Bild und ein erstes Miniaturbild anzeigt;
Aktivieren einer automatischen Aufnahmefunktion durch die elektronische Vorrichtung, um einen ersten Bildrahmen zu erhalten, wobei der erste Bildrahmen einem ersten Zeitstempel entspricht;
Erkennen durch die elektronische Vorrichtung, dass eine Auslösetaste gedrückt wird, während ein zweiter Bildrahmen angezeigt wird, wobei der zweite Bildrahmen einem dritten Zeitstempel entspricht; und
wenn der erste Zeitstempel früher als oder gleich einem zweiten Zeitstempel ist, Anzeigen eines Miniaturbilds des zweiten Bildrahmens durch die elektronische Vorrichtung und Überspringen der Anzeige eines Miniaturbilds des ersten Bildrahmens in der Fotografie-Vorschau-Schnittstelle, wobei der erste Zeitstempel früher als der dritte Zeitstempel ist und der zweite Zeitstempel früher als ein vierter Zeitstempel ist, und wobei die Erzeugungszeit des Miniaturbilds des zweiten Bildrahmens dem zweiten Zeitstempel entspricht und die Erzeugungszeit des Miniaturbilds des ersten Bildrahmens dem vierten Zeitstempel entspricht;
wenn der erste Zeitstempel später als der zweite Zeitstempel ist, Anzeigen des Miniaturbilds des zweiten Bildrahmens durch die elektronische Vorrichtung zuerst, und dann Anzeigen des Miniaturbilds des ersten Bildrahmens in der Fotografie-Vorschau-Schnittstelle;
wobei die elektronische Vorrichtung umfasst: eine Kameraanwendung, ein Kamera-Framework und eine Hardware-Abstraktionsschicht, HAL; und in dem Fall, dass der erste Zeitstempel früher als der zweite Zeitstempel ist, umfasst das Überspringen der Anzeige eines Miniaturbilds des ersten Bildrahmens: Senden des ersten Bildrahmens durch ein Entscheidungsmodul in der HAL an ein Datenverpackungsmodul in der HAL; Verpacken des ersten Bildrahmens durch das Datenverpackungsmodul; Zurücksenden eines verpackten ersten Bildrahmens durch das Datenverpackungsmodul an das Kamera-Framework, wobei der verpackte erste Bildrahmen das Miniaturbild des ersten Bildrahmens umfasst; Zurücksenden des verpackten ersten Bildrahmens durch das Kamera-Framework an ein automatisches Bildspeichermodul in der Kameraanwendung; Extrahieren des Miniaturbilds des ersten Bildrahmens aus dem verpackten ersten Bildrahmen durch das automatische Bildspeichermodul; und Bestimmen durch das automatische Bildspeichermodul, ob der Zeitstempel des ersten Bildrahmens früher als der Zeitstempel des Miniaturbilds des zweiten Bildrahmens ist, und wenn der Zeitstempel des ersten Bildrahmens früher als der Zeitstempel des Miniaturbilds des zweiten Bildrahmens ist, Bestimmen, das Miniaturbild des ersten Bildrahmens nicht zu aktualisieren und anzuzeigen;
wobei das Anzeigen, durch die elektronische Vorrichtung, einer Miniaturansicht des zweiten Bildrahmens umfasst: Zurückgeben, durch ein Entscheidungsmodul im HAL, der Miniaturansicht des zweiten Bildrahmens an das Kamera-Framework; Zurückgeben, durch das Kamera-Framework, der Miniaturansicht des zweiten Bildrahmens an ein UI-Modul in der Kameraanwendung; und Anzeigen, durch das UI-Modul, der Miniaturansicht des zweiten Bildrahmens.

2. Das Verfahren nach Anspruch 1, ferner umfassend:
Speichern, durch die elektronische Vorrichtung, des ersten Bildrahmens in einer Galerie; und
Speichern, durch die elektronische Vorrichtung, eines dritten Bildrahmens in der Galerie, wobei ein Zeitstempel des dritten Bildrahmens später liegt als der erste Zeitstempel des ersten Bildrahmens;
wobei der dritte Bildrahmen basierend auf einem Bildrahmen in einem ersten Zeitbereich erhalten wird, wobei ein vom Kameraobjektiv im ersten Zeitbereich erfasster Bildrahmen den zweiten Bildrahmen umfasst; und der dritte Bildrahmen sich von dem zweiten Bildrahmen unterscheidet, und
wobei der erste Zeitbereich eine erste Dauer vor der manuellen Aufnahme und/oder eine zweite Dauer nach der manuellen Aufnahme umfasst.

3. Das Verfahren nach Anspruch 2, ferner umfassend:
Speichern, durch die elektronische Vorrichtung, der Miniaturansicht des ersten Bildrahmens in der Galerie; und
Speichern, durch die elektronische Vorrichtung, einer Miniaturansicht des dritten Bildrahmens in der Galerie, wobei ein Zeitstempel der Miniaturansicht des dritten Bildrahmens später liegt als der erste Zeitstempel der Miniaturansicht des ersten Bildrahmens.

4. Das Verfahren nach Anspruch 2 oder 3, ferner umfassend:
Beenden, durch die elektronische Vorrichtung, der Anzeige der Aufnahme-Vorschau-Schnittstelle; und
erneutes Anzeigen, durch die elektronische Vorrichtung, der Aufnahme-Vorschau-Schnittstelle und Anzeigen einer Miniaturansicht des dritten Bildrahmens in der Aufnahme-Vorschau-Schnittstelle.

5. Das Verfahren nach Anspruch 2 oder 3, ferner umfassend:
Erkennen, durch die elektronische Vorrichtung in der Aufnahme-Vorschau-Schnittstelle, einer Operation des Antippens der Miniaturansicht des zweiten Bildrahmens;
Anzeigen, durch die elektronische Vorrichtung, einer Vollbild-Anzeigeschnittstelle einer Galerieanwendung, wobei die Vollbild-Anzeigeschnittstelle den dritten Bildrahmen anzeigt;
Erkennen, durch die elektronische Vorrichtung in der Vollbild-Anzeigeschnittstelle, einer Operation des Vorwärtsblätterns von Fotos; und
Aktualisieren und Anzeigen, durch die elektronische Vorrichtung, des ersten Bildrahmens in der Vollbild-Anzeigeschnittstelle.

6. Verfahren nach einem der Ansprüche 1 bis 5, wobei der erste Bildrahmen aus einem Vorschaurahmen erhalten wird, der nach Aktivierung der automatischen Aufnahmefunktion erhalten wurde.

7. Verfahren nach Anspruch 6, wobei das Erhalten des ersten Bildrahmens aus einem Vorschaurahmen, der nach Aktivierung der automatischen Aufnahmefunktion erhalten wurde, Folgendes umfasst:
Erhalten eines Vorschaurahmens in einem Vorschaustrom von einem Vorschaustrommodul in der HAL durch ein Algorithmusmodul in der HAL;
Bestimmen eines lokalen optimalen Rahmens durch das Algorithmusmodul in der HAL aus jeder aufeinanderfolgenden Vielzahl von Rahmen rückwärts von einem Zeitpunkt an, zu dem die automatische Aufnahme aktiviert wird, wobei der lokale optimale Rahmen ein Vorschaurahmen mit einer höchsten Bildbewertung oder ein Vorschaurahmen mit einer Bildbewertung höher als ein erster Referenzwert in der aufeinanderfolgenden Vielzahl von Rahmen ist; und
nach dem Finden eines lokalen optimalen Rahmens aus einer vorangehenden aufeinanderfolgenden Vielzahl von Rahmen, Bestimmen durch das Algorithmusmodul, ob es einen nächsten lokalen optimalen Rahmen in einer folgenden aufeinanderfolgenden Vielzahl von Vorschaurahmen gibt; wenn es den nächsten lokalen optimalen Rahmen in der folgenden aufeinanderfolgenden Vielzahl von Vorschaurahmen gibt, Ersetzen eines vorangehenden lokalen optimalen Rahmens durch einen folgenden lokalen optimalen Rahmen; oder wenn es keinen nächsten lokalen optimalen Rahmen in der folgenden aufeinanderfolgenden Vielzahl von Vorschaurahmen gibt, Kennzeichnen eines vorangehenden lokalen optimalen Rahmens als den ersten Bildrahmen.

8. Verfahren nach einem der Ansprüche 2 bis 4, wobei die elektronische Vorrichtung umfasst: eine Kameraanwendung, ein Kamera-Framework und eine HAL; und wobei das Erhalten des dritten Bildrahmens basierend auf einem Bildrahmen in einem ersten Zeitbereich Folgendes umfasst:
Erhalten eines Vorschaurahmens in einem Vorschaustrom und von Rahmeninformationen des Vorschaurahmens von einem Rahmenpufferungsmodul in der HAL durch ein Entscheidungsmodul in der HAL, wobei die Rahmeninformationen einen Zeitstempel und eine Bildbewertung umfassen;
Auswählen eines lokalen optimalen Rahmens durch das Entscheidungsmodul einmal pro Zeitspanne und Pufferung des lokalen optimalen Rahmens in einer Warteschlange, wobei der lokale optimale Rahmen ein Vorschaurahmen mit einer höchsten Bildbewertung oder ein Vorschaurahmen mit einer Bildbewertung höher als ein erster Referenzwert innerhalb der Zeitspanne ist; und
Auswählen des dritten Bildrahmens durch das Entscheidungsmodul aus einem lokalen optimalen Rahmen, der in einer Warteschlange gepuffert ist und sich im ersten Zeitbereich befindet, wobei der dritte Bildrahmen ein Vorschaurahmen mit einer höchsten Bildbewertung oder ein Vorschaurahmen mit einer Bildbewertung höher als ein zweiter Referenzwert im ersten Zeitbereich ist.

9. Verfahren nach Anspruch 8, ferner umfassend:
Erlangen eines Vorschaubildes aus der Vorschau von einem Vorschau-Stream-Modul im HAL durch ein Algorithmusmodul im HAL und Durchführen einer Bildauswertung an dem Vorschaubild, um eine Bildauswertung zu erhalten;
Zurückgeben der Bildauswertung des Vorschaubildes durch das Algorithmusmodul an das Frame-Puffermodul im HAL; und
Empfangen des Vorschaubildes im von dem Vorschau-Stream-Modul übertragenen Vorschau-Stream durch das Frame-Puffermodul sowie Puffern des Vorschaubildes und der Frame-Informationen des Vorschaubildes.

10. Verfahren nach einem der Ansprüche 2 bis 5, wobei das Speichern eines dritten Bildframes in der Galerie durch die elektronische Vorrichtung umfasst:
Senden des dritten Bildframes durch ein Entscheidungsmodul an ein Datenpaketierungsmodul in einem HAL;
Paketieren eines dritten Bildframes durch das Datenpaketierungsmodul und Zurückgeben des paketierten dritten Bildframes an ein Kamera-Framework, wobei der paketierte dritte Bildframe das Thumbnail des dritten Bildframes umfasst;
Zurückgeben des paketierten dritten Bildframes durch das Kamera-Framework an ein Bildspeichermodul in einer Kameraanwendung; und
Speichern des paketierten dritten Bildframes durch das Bildspeichermodul.

11. Elektronische Vorrichtung (100), umfassend einen oder mehrere Prozessoren (110) und einen oder mehrere Speicher (126), wobei der eine oder die mehreren Speicher mit dem einen oder den mehreren Prozessoren gekoppelt sind und der eine oder die mehreren Speicher dazu konfiguriert sind, Computerprogrammcode zu speichern, wobei der Computerprogrammcode Computeranweisungen umfasst, und wobei bei Ausführung der Computeranweisungen durch den einen oder die mehreren Prozessoren das Verfahren nach einem der Ansprüche 1 bis 10 durchgeführt wird.

12. Computerlesbares Speichermedium, umfassend Anweisungen, wobei bei Ausführung der Anweisungen durch eine elektronische Vorrichtung das Verfahren nach einem der Ansprüche 1 bis 10 durchgeführt wird.

## Revendications

1. Procédé de photographie, comprenant :
l'affichage, par un dispositif électronique, d'une interface de prévisualisation, dans lequel l'interface de prévisualisation affiche une image capturée par un objectif de caméra du dispositif électronique et une première vignette ;
l'activation, par le dispositif électronique, d'une fonction de capture automatique, pour obtenir une première trame d'image, dans lequel la première trame d'image correspond à un premier horodatage ;
la détection, par le dispositif électronique, qu'un bouton de déclenchement est pressé lors de l'affichage d'une deuxième trame d'image, dans lequel la deuxième trame d'image correspond à un troisième horodatage ; et
lorsque le premier horodatage est antérieur ou égal à un deuxième horodatage, l'affichage, par le dispositif électronique, d'une vignette de la deuxième trame d'image, et l'omission de l'affichage d'une vignette de la première trame d'image dans l'interface de prévisualisation photographique, dans lequel le premier horodatage est antérieur au troisième horodatage et le deuxième horodatage est antérieur à un quatrième horodatage, et dans lequel l'heure de génération de la vignette de la deuxième trame d'image correspond au deuxième horodatage, et l'heure de génération de la vignette de la première trame d'image correspond au quatrième horodatage ;
lorsque le premier horodatage est postérieur au deuxième horodatage, l'affichage, par le dispositif électronique, de la vignette de la deuxième trame d'image en premier, puis l'affichage de la vignette de la première trame d'image dans l'interface de prévisualisation photographique ;
dans lequel le dispositif électronique comprend : une application de caméra, une infrastructure de caméra, et une couche d'abstraction matérielle, HAL ; et dans le cas où le premier horodatage est antérieur au deuxième horodatage, l'omission de l'affichage d'une vignette de la première trame d'image comprend : l'envoi, par un module de prise de décision dans la HAL, de la première trame d'image à un module de conditionnement de données dans la HAL ; le conditionnement, par le module de conditionnement de données, de la première trame d'image ; le renvoi, par le module de conditionnement de données, d'une première trame d'image conditionnée à l'infrastructure de caméra, dans lequel la première trame d'image conditionnée comprend la vignette de la première trame d'image ; le renvoi, par l'infrastructure de caméra, de la première trame d'image conditionnée à un module de stockage d'image automatique dans l'application de caméra ; l'extraction, par le module de stockage d'image automatique, de la vignette de la première trame d'image à partir de la première trame d'image conditionnée ; et la détermination, par le module de stockage d'image automatique, si l'horodatage de la première trame d'image est antérieur à l'horodatage de la vignette de la deuxième trame d'image, et si l'horodatage de la première trame d'image est antérieur à l'horodatage de la vignette de la deuxième trame d'image, la détermination de ne pas rafraîchir ni afficher la vignette de la première trame d'image ;
dans lequel l'affichage, par le dispositif électronique, d'une vignette de la seconde trame d'image comprend : le renvoi, par un module de prise de décision dans le HAL, de la vignette de la seconde trame d'image vers le framework de caméra ; le renvoi, par le framework de caméra, de la vignette de la seconde trame d'image vers un module d'interface utilisateur dans l'application de caméra ; et l'affichage, par le module d'interface utilisateur, de la vignette de la seconde trame d'image.

2. Procédé selon la revendication 1, comprenant en outre :
le stockage, par le dispositif électronique, de la première trame d'image dans une galerie ; et
le stockage, par le dispositif électronique, d'une troisième trame d'image dans la galerie, dans lequel un horodatage de la troisième trame d'image est postérieur au premier horodatage de la première trame d'image ;
dans lequel la troisième trame d'image est obtenue sur la base d'une trame d'image dans une première plage temporelle, une trame d'image capturée par l'objectif de caméra dans la première plage temporelle comprend la seconde trame d'image ; et la troisième trame d'image est différente de la seconde trame d'image, et
dans lequel la première plage temporelle comprend une première durée avant la capture manuelle et/ou une seconde durée après la capture manuelle.

3. Procédé selon la revendication 2, comprenant en outre :
le stockage, par le dispositif électronique, de la vignette de la première trame d'image dans la galerie ; et
le stockage, par le dispositif électronique, d'une vignette de la troisième trame d'image dans la galerie, dans lequel un horodatage de la vignette de la troisième trame d'image est postérieur au premier horodatage de la vignette de la première trame d'image.

4. Procédé selon la revendication 2 ou 3, comprenant en outre :
la sortie, par le dispositif électronique, de l'affichage de l'interface de prévisualisation de photographie ; et
l'affichage, par le dispositif électronique, de l'interface de prévisualisation de photographie à nouveau, et l'affichage d'une vignette de la troisième trame d'image dans l'interface de prévisualisation de photographie.

5. Procédé selon la revendication 2 ou 3, comprenant en outre :
la détection, par le dispositif électronique dans l'interface de prévisualisation de photographie, d'une opération de toucher sur la vignette de la seconde trame d'image ;
l'affichage, par le dispositif électronique, d'une interface d'affichage d'image en taille réelle d'une application de galerie, dans lequel l'interface d'affichage d'image en taille réelle affiche la troisième trame d'image ;
la détection, par le dispositif électronique dans l'interface d'affichage d'image en taille réelle, d'une opération de visualisation d'une photo vers l'avant ; et
l'actualisation et l'affichage, par le dispositif électronique, de la première trame d'image dans l'interface d'affichage d'image en taille réelle.

6. Procédé selon l'une quelconque des revendications 1 à 5, dans lequel la première trame d'image est obtenue à partir d'une trame de prévisualisation obtenue après l'activation de la fonction de capture automatique.

7. Procédé selon la revendication 6, dans lequel la première trame d'image est obtenue à partir d'une trame de prévisualisation obtenue après l'activation de la fonction de capture automatique comprend :
l'obtention, par un module d'algorithme dans le HAL, d'une trame de prévisualisation dans un flux de prévisualisation provenant d'un module de flux de prévisualisation dans le HAL ;
la détermination, par le module d'algorithme dans le HAL, d'une trame optimale locale parmi chaque pluralité consécutive de trames vers l'arrière à partir d'un moment où la capture automatique est activée, dans lequel la trame optimale locale est une trame de prévisualisation avec une évaluation d'image la plus élevée ou une trame de prévisualisation avec une évaluation d'image supérieure à une première valeur de référence dans la pluralité consécutive de trames ; et
après avoir trouvé une trame optimale locale à partir d'une pluralité consécutive précédente de trames, la détermination, par le module d'algorithme, de l'existence d'une trame optimale locale suivante dans une pluralité consécutive suivante de trames de prévisualisation ; s'il existe une trame optimale locale suivante dans la pluralité consécutive suivante de trames de prévisualisation, le remplacement d'une trame optimale locale précédente par une trame optimale locale suivante ; ou s'il n'existe pas de trame optimale locale suivante dans la pluralité consécutive suivante de trames de prévisualisation, la désignation d'une trame optimale locale précédente comme étant la première trame d'image.

8. Procédé selon l'une quelconque des revendications 2 à 4, dans lequel le dispositif é lectronique comprend : une application d'appareil photo, un cadre d'appareil photo (camera framework), et un HAL ; et le fait que la troisième trame d'image soit obtenue sur la base d'une trame d'image dans une première plage temporelle comprend :
l'obtention, par un module de prise de décision dans le HAL, d'une trame de prévisualisation dans un flux de prévisualisation et d'informations de trame de la trame de prévisualisation à partir d'un module de mise en mémoire tampon de trame dans le HAL, dans lequel les informations de trame comprennent un horodatage et une évaluation d'image ;
la sélection, par le module de prise de décision, d'une trame optimale locale une fois par période de temps, et la mise en mémoire tampon de la trame optimale locale de manière mise en file d'attente, dans lequel la trame optimale locale est une trame de prévisualisation avec une évaluation d'image la plus élevée ou une trame de prévisualisation avec une évaluation d'image supérieure à une première valeur de référence au cours de la période de temps ; et
la sélection, par le module de prise de décision, de la troisième trame d'image à partir d'une trame optimale locale qui est mise en mémoire tampon de manière mise en file d'attente et qui se trouve dans la première plage temporelle, dans lequel la troisième trame d'image est une trame de prévisualisation avec une évaluation d'image la plus élevée ou une trame de prévisualisation avec une évaluation d'image supérieure à une seconde valeur de référence dans la première plage temporelle.

9. Procédé selon la revendication 8, comprenant en outre :
obtention, par un module d'algorithme dans le HAL, d'une trame de prévisualisation en prévisualisation provenant d'un module de flux de prévisualisation dans le HAL, et exécution d'une évaluation d'image sur la trame de prévisualisation, pour obtenir une évaluation d'image ;
renvoi, par le module d'algorithme, de l'évaluation d'image de la trame de prévisualisation au module de mise en mémoire tampon de trames dans le HAL ; et
réception, par le module de mise en mémoire tampon de trames, de la trame de prévisualisation dans le flux de prévisualisation transmis par le module de flux de prévisualisation, et mise en mémoire tampon de la trame de prévisualisation et des informations de trame de la trame de prévisualisation.

10. Procédé selon l'une quelconque des revendications 2 à 5, dans lequel le stockage, par le dispositif électronique, d'une troisième trame d'image dans la galerie comprend :
envoi, par un module de prise de décision, de la troisième trame d'image à un module de conditionnement de données dans un HAL ;
conditionnement, par le module de conditionnement de données, d'une troisième trame d'image, et renvoi de la troisième trame d'image conditionnée à une infrastructure de caméra, dans lequel la troisième trame d'image conditionnée comprend la vignette de la troisième trame d'image ;
renvoi, par l'infrastructure de caméra, de la troisième trame d'image conditionnée à un module de stockage d'images dans une application de caméra ; et
stockage, par le module de stockage d'images, de la troisième trame d'image conditionnée.

11. Dispositif électronique (100), comprenant un ou plusieurs processeurs (110) et une ou plusieurs mémoires (126), dans lequel les une ou plusieurs mémoires sont couplées aux un ou plusieurs processeurs, et les une ou plusieurs mémoires sont configurées pour stocker un code de programme informatique, le code de programme informatique comprend des instructions informatiques, et lorsque les un ou plusieurs processeurs exécutent les instructions informatiques, le procédé selon l'une quelconque des revendications 1 à 10 est exécuté.

12. Support de stockage lisible par ordinateur, comprenant des instructions, dans lequel lorsque le dispositif électronique exécute les instructions, le procédé selon l'une quelconque des revendications 1 à 10 est exécuté.
